# EUROPÄISCHE PATENTSCHRIFT

(11) **EP 3 535 144 B1**
(45) Veröffentlichungstag und Bekanntmachung des Hinweises auf die Patenterteilung: **09.12.2020**
(21) Anmeldenummer: 17777026.0
(22) Anmeldetag: 28.09.2017
(51) Int. Cl.: B60C 23/04

(54) **VERFAHREN ZUM ZUORDNEN VON REIFEN-SENSOR-MODULEN ZU EINEM ANHÄNGERFAHRZEUG EINES EIGENEN NUTZFAHRZEUG-GESPANNS**
METHOD FOR ALLOCATING WHEEL ELECTRONIC UNIT FOR A TIRE MONITORING SYSTEM OF A TRUCK HAVING A TRAILER
METHODE DE DEFINITION DE POSITIONS RESPECTIVES DE MODULES ELECTRONIQUES DE ROUE POUR UN SYSTEME DE SURVEILLANCE DE PNEUMATIQUES D'UN VEHICULE UTILITAIRE SUIVI D'UNE REMORQUE

(30) Priorität: 01.11.2016 DE 102016221430
(43) Veröffentlichungstag der Anmeldung: 11.09.2019
(73) Patentinhaber: Continental Reifen Deutschland GmbH, 30165 Hannover (DE)
(72) Erfinder: CYLLIK, Adrian, 30159 Hannover (DE); HANNA, Jörg, 32289 Rödinghausen (DE); SCHER, Andreas, 31303 Burgdorf (DE)
(74) Vertreter: Finger, Karsten
(86) Internationale Anmeldenummer: PCT/EP2017/074569
(87) Internationale Veröffentlichungsnummer: WO 2018/082846

(56) Entgegenhaltungen:
- WO-A1-2013/190189
- WO-A1-2015/052439
- DE-A1-102008 032 920
- DE-A1-102008 033 844
- DE-A1-102010 062 058
- DE-A1-102013 101 619
- US-A1- 2008 154 560

## Beschreibung

Die Erfindung betrifft ein Verfahren zum Zuordnen von Reifen-Sensor-Modulen zu einem Anhängerfahrzeug eines eigenen Nutzfahrzeug-Gespanns gemäß dem Oberbegriff des Anspruchs 1.

Zur Überwachung von Reifenzuständen, insbesondere einem Reifendruck, von Reifen eines Nutzfahrzeuges sind Reifen-Sensor-Module bzw. Transponder bekannt, die beispielsweise im Inneren eines Reifens angeordnet sind. Derartige Reifen-Sensor-Module sind ausgebildet, positionsgebunden einen Reifendruck, mechanische Spannungszustände im Reifen sowie eine Reifentemperatur zu erfassen, zu verarbeiten und per hochfrequentem (HF) Funksignal über ein Datentelegramm an ein elektronisches Steuergerät (ECU) eines Überwachungssystems zu übertragen. Das Steuergerät nimmt das Datentelegramm über ein Empfangsmodul des Überwachungssystems auf und gibt in Abhängigkeit von Grenzwerten ein Statussignal an den Fahrer aus, beispielsweise wenn an einem der Reifen ein Reifendruck unterhalb eines Grenzwertes festgestellt wurde. Ein Beispiel für ein solches Reifen-Sensor-Modul offenbart die DE 102 43 441 A1. Weiterhin kann von einem Reifen-Sensor-Modul über das Datentelegramm ein Reifen-Sensor-Modul-Zustand an das Steuergerät übertragen werden, beispielsweise ein Sensor-Defekt oder das Vorhandensein eines losen Reifen-Sensor-Moduls, und an den Fahrer über das Statussignal ausgegeben werden.

Werden die Reifen eines zweiteiligen Nutzfahrzeuges bzw. Nutzfahrzeug-Gespanns aus einem Zugfahrzeug und einem Anhängerfahrzeug, d.h. Auflieger oder Anhänger überwacht, so werden die Reifen-Sensor-Module des Zugfahrzeuges über eine Sensor-Kennung bzw. eine Sensor-Identifikation bereits vorab im Steuergerät eingespeichert, wobei das jeweilige Reifen-Sensor-Modul einem Reifen des Zugfahrzeuges eindeutig zugeordnet wird. Ist ein Anhängerfahrzeug für einen längeren Zeitraum mit dem Zugfahrzeug verbunden, können die Reifen-Sensor-Module dieses Anhängerfahrzeuges ebenfalls im Steuergerät gespeichert und den einzelnen Reifen eindeutig zugeordnet werden. Wird das Anhängerfahrzeug jedoch häufig gewechselt, werden die Reifen-Sensor-Module des Anhängerfahrzeuges vom Überwachungssystem durch eine automatische Anhänger-Erkennung eingebunden. Dadurch ist bei einem Wechsel des Anhängerfahrzeuges kein manuelles Einspeichern nötig, allerdings können die jeweiligen Reifen-Sensor-Module den Reifen des Anhängerfahrzeuges nicht positionsgebunden einem bestimmten Reifen zugeordnet werden.

Zur automatischen Anhänger-Erkennung wird von dem Überwachungssystem bei fahrendem Nutzfahrzeug ein Überwachungsbereich auf Datentelegramme von beliebigen Reifen-Sensor-Modulen überwacht, die dem Steuergerät noch nicht bekannt sind. Wird ein neues bzw. unbekanntes Reifen-Sensor-Modul erfasst, wird über einen längeren Zeitraum von beispielsweise bis zu dreißig Minuten festgestellt und plausibilisiert, ob das unbekannte Reifen-Sensor-Modul zum eigenen Anhängerfahrzeug gehört oder nicht. Dies erfolgt beispielsweise durch eine Prüfung, ob sich das Reifen-Sensor-Modul über diesen Zeitraum mit dem Zugfahrzeug mitbewegt oder nicht, indem überwacht wird, ob von diesem unbekannten Reifen-Sensor-Modul über diesen Zeitraum eine bestimmte Anzahl an Datentelegrammen übermittelt werden. Ist die Anhänger-Erkennung abgeschlossen, d.h. es wird eine Zugehörigkeit des Reifen-Sensor-Moduls oder auch mehrerer Reifen-Sensor-Module zum eigenen Anhängerfahrzeug festgestellt, ist das Überwachungssystem bereit, die entsprechenden Datentelegramme des Reifen-Sensor-Moduls auch zu verarbeiten bzw. auszuwerten und beispielsweise Statussignale in Abhängigkeit der erfassten Reifenzustände und/oder Reifen-Sensor-Modul-Zustände auszugeben.

Nachteilig dabei ist, dass eine Ausgabe der Reifenzustände und/oder Reifen-Sensor-Modul-Zustände nicht positionsgebunden erfolgen kann, da dem Steuergerät nach Abschluss der Anhänger-Erkennung nicht bekannt ist, an welchem Reifen die Reifen-Sensor-Module angeordnet sind. Da auch die Anzahl der Räder unbekannt ist, kann auch nicht festgestellt werden, ob von jedem Reifen des Fahrzeuges auch tatsächlich Datentelegramme empfangen werden oder ggf. eines der Reifen-Sensor-Module defekt ist und keine Datentelegramme mehr übermittelt Desweiterhin dauert das Einbinden aller im Überwachungsbereich erkannten und dem eigenen Anhängerfahrzeug zugeordneten Reifen-Sensor-Module sehr lange und der Fahrer des Nutzfahrzeuges erhält bis zur Fertigstellung der Anhänger-Erkennung keine Rückmeldung über den Zustand der Reifen seines Anhängers oder über den Zustand des Reifen-Sensor-Moduls, beispielsweise bei einem defekten Sensor.

In DE 10 2008 032 920 A1 ist ein Verfahren angegeben, in dem eine Zuordnung von Reifendruckinformationen zu Reifen-Sensor-Modulen eines eigenen Anhängerfahrzeuges erfolgt. Dazu ist vorgesehen, dass von einem Reifen-Sensor-Modul erzeugte und ausgegebene Reifendruckinformationen zunächst von Empfangsmodulen bzw. Empfangseinheiten am Anhänger empfangen werden. In den Empfangsmodulen des Anhängers werden die Reifendruckinformationen zusammen mit einer dem jeweiligen Anhänger zugeordneten Identifikation in Datentelegrammen zusammengefasst und ausgegeben. In der Empfangseinheit des Zugfahrzeuges können die in den Datentelegrammen übermittelten Reifendruckinformationen anhand der Identifikation bewertet und dadurch einem eigenen Anhänger eindeutig zugeordnet werden.

In DE 10 2008 033 844 A1 ist zur Zuordnung von Reifen-Sensor-Modulen zu einem eigenen Anhängerfahrzeug vorgesehen, dass nach einem Ankuppeln eines Anhängers an eine Zugmaschine ein Pairing-Modus eingeleitet wird. Dabei werden von einem Empfangsmodul am Anhänger (Anhängermodul) Datentelegramme an ein Empfangsmodul an der Zugmaschine gesendet, wobei die Datentelegramme Zeitstempel enthalten, die die Einschaltdauer des Empfangsmoduls am jeweiligen Anhänger wiedergeben. Durch Bewerten der Zeitstempel wird vom Empfangsmodul in der Zugmaschine entschieden, ob das Datentelegramm dem eigenen Anhänger zuzuordnen ist. Anschließend werden Kennungen der einzelnen Reifen-Sensor-Module über eine Funkverbindung ausgetauscht und im Empfangsmodul der Zugmaschine abgespeichert, um auf die Datentelegramme der jeweiligen Reifen-Sensor-Module entsprechend zugeordnet zugreifen zu können.

In DE 10 2013 101 619 A1 ist ein mobiles Erfassungsgerät vorgesehen, das ausgebildet ist, Datentelegramme von Reifen-Sensor-Modulen auszulesen. Zum Identifizieren von Reifen-Sensor-Modulen ist vorgesehen, dass ein Bediener auf Aufforderung hin mit dem mobilen Erfassungsgerät zum jeweiligen Fahrzeugreifen geht, so dass das Reifen-Sensor-Modul anschließend identifiziert werden kann. Dieser Vorgang wird für jeden Fahrzeugreifen manuell wiederholt und die ausgelesenen Identifikations-Daten der einzelnen Reifen-Sensor-Module anschließend an ein zentrales Empfangsmodul im Zugfahrzeug übermittelt, das der gezielten Reifendrucküberwachung dient.

Es ist Aufgabe der Erfindung, ein Verfahren zum Zuordnen von Reifen-Sensor-Modulen zu einem Anhängerfahrzeug eines eigenen Nutzfahrzeug-Gespanns anzugeben, infolge dessen eine einfache und sichere Überwachung von Reifenzuständen und/oder Reifen-Sensor-Modul-Zuständen an allen Reifen des eigenen Anhängerfahrzeuges ermöglicht wird.

Diese Aufgabe wird durch ein Verfahren nach Anspruch 1 gelöst. Die Unteransprüche geben bevorzugte Weiterbildungen an.

Erfindungsgemäß ist demnach vorgesehen, während einer Anhänger-Erkennung zum Zuordnen von Reifen-Sensor-Modulen zu einem eigenen Anhängerfahrzeug eines eigenen Nutzfahrzeug-Gespanns zusätzlich eine Radposition sowie eine Anhänger-Achskonfiguration zu berücksichtigen, die beispielsweise auf den Reifen-Sensor-Modulen nach der Montage der Reifen am Anhängerfahrzeug gespeichert werden und über ein Datentelegramm an ein Überwachungssystem auf dem eigenen Fahrzeug-Gespann übermittelt werden können. Dadurch kann den erkannten Reifen-Sensor-Modulen vorteilhafterweise auch eine Position am eigenen Anhängerfahrzeug zugeordnet werden, so dass eine Überwachung und eine Ausgabe von Reifenzuständen und/oder Reifen-Sensor-Modul-Zuständen auch positionsgebunden erfolgen kann.

Zur Anhänger-Erkennung werden die Datentelegramme von allen Reifen-Sensor-Modulen in einem Überwachungsbereich eines Empfangsmoduls des Überwachungssystems zunächst erfasst, wobei das Empfangsmodul vorzugsweise an einem Zugfahrzeug des Nutzfahrzeug-Gespanns angeordnet ist. Anhand der erfassten Datentelegramme sowie der darüber übertragenen Informationen wird eine Plausibilisierung bzw. Bewertung durchgeführt, bei der geprüft wird, ob das Reifen-Sensor-Modul dem eigenen Anhängerfahrzeug oder einem benachbarten Anhängerfahrzeug zugeordnet ist. Um dies zu erreichen, werden die erfassten Datentelegramme zunächst lediglich über eine Sensor-Identifikation einem Reifen-Sensor-Modul zugeordnet und für jedes Reifen-Sensor-Modul bzw. für jede Sensor-Identifikation jeweils die Anzahl an erfassten Datentelegrammen hochgezählt, beispielsweise um eins. Bei Erreichen eines Maximal-Zählers durch ein bestimmtes Reifen-Sensor-Modul wird die Bewertung gestartet, um festzustellen, ob die bis dahin erkannten Reifen-Sensor-Module zum eigenen Anhängerfahrzeug oder zu einem benachbarten Anhängerfahrzeug gehören. Wird in der Bewertung mit hoher Sicherheit festgestellt, dass ein Reifen-Sensor-Modul an einem Reifen des eigenen Anhängerfahrzeuges angeordnet ist, wird das jeweilige Reifen-Sensor-Modul dem eigenen Anhängerfahrzeug zugeordnet.

Gemäß einer Ausführungsform, die eine einfache Anhänger-Erkennung angibt, wird die Bewertung lediglich während der Fahrt ausgeführt und der Maximal-Zähler auf beispielsweise 30 gesetzt. Wird diese Anzahl an Datentelegrammen für ein bestimmtes Reifen-Sensor-Modul empfangen bzw. wird der Maximal-Zähler erreicht, wird dieses Reifen-Sensor-Modul zunächst akzeptiert und für alle weiteren Reifen-Sensor-Module im Überwachungsbereich, die sich ebenfalls bewegen, wird anschließend bewertet, ob bis zu diesem Zeitpunkt genügend Datentelegramme empfangen wurden, so dass eine Zuordnung zum eigenen Anhängerfahrzeug sehr wahrscheinlich ist. Ist dies der Fall, werden auch diese weiteren Reifen-Sensor-Module akzeptiert.

Um sicherzustellen, dass während oder nach abgeschlossener einfacher Anhänger-Erkennung auch tatsächlich an allen Reifen des eigenen Anhängerfahrzeuges eine Überwachung stattfinden kann bzw. Reifen-Sensor-Module an allen Reifen des eigenen Anhängerfahrzeuges auch tatsächlich erkannt wurden, wird, nachdem einzelne Reifen-Sensor-Module akzeptiert wurden, zusätzlich die ebenfalls übermittelte Radposition in Abhängigkeit der Anhänger-Achskonfiguration berücksichtigt, die nach dem Akzeptieren eines Reifen-Sensor-Moduls auf dem Steuergerät und der entsprechenden Sensor-Identifikation zugeordnet zwischengespeichert werden. Anhand der Anhänger-Achskonfiguration kann dann vorteilhafterweise geprüft werden, wie viele Achsen und demnach wie viele Reifen das Anhängerfahrzeug besitzt und ob Datentelegramme von allen diesen zu erwartenden Reifen-Sensor-Modulen erfasst wurden. Erst dann ist die einfache Anhänger-Erkennung vollständig abgeschlossen, und es kann eine positionsgebundene Anzeige von Reifenzuständen und/oder Reifen-Sensor-Modul-Zuständen für all die Räder des Anhängerfahrzeuges an den Fahrer erfolgen, für die in der Überprüfung eine eindeutige Zuordnung anhand der Radposition und der Anhänger-Achskonfiguration festgestellt werden konnte.

Die Anhänger-Achskonfiguration sowie die Radposition können dazu vorteilhafterweise codiert über das Datentelegramm übertragen werden. D.h. jeder möglichen Anhänger-Achskonfiguration wird jeweils ein Wert zugewiesen und für jede mögliche Radposition innerhalb der entsprechenden Anhänger-Achskonfiguration wird ebenfalls jeweils ein Wert vergeben. Diese Zuweisung wird entsprechend auf einem Steuergerät des Überwachungssystems gespeichert. Wird dann der auf dem Reifen-Sensor-Modul gespeicherte Wert für die Anhänger-Achskonfiguration und der Wert für die Radposition des Reifen-Sensor-Moduls innerhalb dieser Anhänger-Achskonfiguration über das Datentelegramm auf das Überwachungssystem übertragen, kann anhand der auf dem Steuergerät gespeicherten Zuweisung die Position des Reifen-Sensor-Moduls eindeutig zugeordnet werden.

Somit kann vorteilhafterweise erkannt werden, ob in der einfachen Anhänger-Erkennung auch alle zugehörigen Reifen-Sensor-Module erfasst wurden und zudem die Größe der übertragenen Daten minimiert werden, da durch die Codierung weniger Daten bezüglich der Reifenposition über das Datentelegramm zu übertragen sind.

Als Radposition kann vorteilhafterweise auch auf eine Koordinatendarstellung in einem vorab festgelegten Koordinatensystem zurückgegriffen werden, wobei dann als Radpositionen das Koordinatenpaar des jeweiligen Reifens übertragen wird und zusätzlich die Anhänger-Achskonfiguration.

Zum weiteren Optimieren der Datenübertragung ist vorteilhafterweise vorgesehen, den über das Datentelegramm zu übertragenden Inhalt, d.h. die Radposition und die Anhänger-Achskonfiguration, je nach Datenumfang auf mehrere Datentelegramme aufzuteilen, wobei für die unterschiedlichen Inhalte innerhalb eines Datentelegramms jeweils derselbe Abschnitt verwendet wird. Demnach wird beispielweise in einem Datentelegramm die Anhänger-Achskonfiguration und in einem weiteren, vorzugsweise nachfolgenden, Datentelegramm in demselben Abschnitt des Datentelegramms die Radposition übertragen. Um Fehlinterpretationen der vom Steuergerät des Überwachungssystems empfangenen Datentelegramme zu vermeiden, wird beispielsweise über ein Identifikationsbit angezeigt, welcher Inhalt gerade übertragen wird, z.B. "0" für die Anhänger-Achskonfiguration und "1" für die Radposition. Das Steuergerät kann dann anhand des Identifikationsbits erkennen, welche Information gerade übertragen wird.

Dieser Ansatz ist dann vorteilhaft, wenn der vorgesehene Abschnitt in einem Datentelegramm nicht ausreicht, um alle notwendigen Informationen in lediglich einem Datentelegramm zu übertragen.

Gemäß einer vorteilhaften Weiterbildung ist vorgesehen, die dem eigenen Anhängerfahrzeug während der einfachen Anhänger-Erkennung zugeordneten Reifen-Sensor-Module anhand der übertragenen Anhänger-Achskonfiguration sowie der Radposition zu plausibilisieren, um die einfache Anhänger-Erkennung vollständig abzuschließen.

Dazu kann beispielsweise geprüft werden, ob jedes dem eigenen Anhängerfahrzeug während der einfachen Anhänger-Erkennung anhand der Sensor-Identifikation zugeordnete Reifen-Sensor-Modul über das Datentelegramm auch tatsächlich eine Anhänger-Achskonfiguration überträgt. Dadurch kann die Zuverlässigkeit erhöht werden, da später nur für diejenigen Reifen-Sensor-Module eine positionsgebundene Anzeige erfolgt, die eine solche Anzeige durch die auf ihr gespeicherten Informationen auch unterstützen. Weiterhin kann geprüft werden, ob jedes dem eigenen Anhängerfahrzeug während der einfachen Anhänger-Erkennung anhand der Sensor-Identifikation zugeordnete Reifen-Sensor-Modul dieselbe Anhänger-Achskonfiguration überträgt, um sicherzustellen, dass auf den Reifen-Sensor-Modulen keine falschen Informationen gespeichert wurden. Weiterhin kann geprüft werden, ob die Anzahl der dem eigenen Anhängerfahrzeug während der einfachen Anhänger-Erkennung anhand der Sensor-Identifikation zugeordneten Reifen-Sensor-Modulen, im folgenden Modul-Anzahl genannt, kleiner oder gleich der anhand der Anhänger-Achskonfiguration zu erwartenden Anzahl an Reifen-Sensor-Modulen am eigenen Anhängerfahrzeug ist. Somit kann festgestellt werden, inwieweit für alle Reifen des eigenen Anhängerfahrzeuges auch ein Reifen-Sensor-Modul erkannt wurde oder ob zu viele oder zu wenige Reifen-Sensor-Module erkannt wurden.

Bezüglich der Reifenpositionen kann geprüft werden, ob jedes dem eigenen Anhängerfahrzeug während der einfachen Anhänger-Erkennung anhand der Sensor-Identifikation zugeordnete Reifen-Sensor-Modul über das Datentelegramm auch tatsächlich eine Radposition überträgt, um beispielsweise eine unvollständige Abspeicherung der Reifenposition auf den einzelnen Reifen-Sensor-Modulen zu erkennen. Weiterhin wird überprüft, ob jedes dem eigenen Anhängerfahrzeug während der einfachen Anhänger-Erkennung anhand der Sensor-Identifikation zugeordnete Reifen-Sensor-Modul eine unterschiedliche Radposition überträgt, um beispielsweise eine fehlerhafte Abspeicherung der Reifenposition auf den Reifen-Sensor-Modulen zu erkennen.

Abschließend kann geprüft werden, ob alle Radpositionen, die gemäß der Anhänger-Achskonfiguration zu erwarten sind, von den Reifen-Sensor-Modulen übertragen werden, d.h. alle Reifenpositionen auch tatsächlich besetzt sind, um fehlende Reifen-Sensor-Module zu erkennen. Wurden für alle Reifen Reifen-Sensor-Module erkannt, ist die einfache Anhänger-Erkennung vollständig, und es kann für jeden Reifen eine positionsgebundene Anzeige von Reifenzuständen oder Reifen-Sensor-Zuständen erfolgen. Ist dies nicht der Fall, gibt es mehrere Möglichkeiten, die einfache Anhänger-Erkennung dennoch abzuschließen:
Falls erkannt wurde, dass die Modul-Anzahl größer als die gemäß der Anhänger-Achskonfiguration zu erwartenden Anzahl an Reifen-Sensor-Modulen ist, kann die Positionszuordnung der Reifen-Sensor-Module vorteilhafterweise vollständig im Zwischenspeicher des Steuergerätes gelöscht werden, da eine positionsgebundene Anzeige von Reifenzuständen und/oder Sensor-Modul-Zuständen für alle Reifen-Sensor-Module zu unsicher ist, da unklar ist, von welchem bzw. welchen Reifen-Sensor-Modulen der entsprechende Reifenzustand und/oder Sensor-Modul-Zustand übertragen wird. Weiterhin kann ergänzend eine Fehlermeldung ausgegeben werden. Die einfache Anhänger-Erkennung ist dann abgeschlossen, wobei eine Anzeige von Reifenzuständen und/oder Reifen-Sensor-Modul-Zuständen in diesem Fall neben der Ausgabe der Fehlermeldung wahlweise beispielsweise positionsungebunden erfolgen kann, so dass dem Fahrer immerhin angezeigt werden kann, dass ein Fehler vorliegt.

Wurde erkannt, dass einzelne dem eigenen Anhängerfahrzeug während der einfachen Anhänger-Erkennung anhand der Sensor-Identifikation zugeordnete Reifen-Sensor-Module keine Anhänger-Achskonfiguration und/oder unterschiedliche Anhänger-Achskonfigurationen über das Datentelegramm übertragen, kann eine Anhänger-Achskonfiguration vorteilhafterweise als verlässlich angenommen und für das eigene Anhängerfahrzeug im Rahmen der einfachen Anhänger-Erkennung übernommen werden, wenn zumindest eine vorab festgelegte, maximale Modul-Anzahl von dem eigenen Anhängefahrzeug zugeordneten Reifen-Sensor-Modulen dieselbe Anhänger-Achskonfiguration überträgt. Die vorab festgelegte, maximale Modul-Anzahl kann beispielsweise der Hälfte der Modul-Anzahl von erkannten Reifen-Sensor-Modulen für das eigene Anhänger-Fahrzeug entsprechen.

Für die Reifen-Sensor-Module, für die keine oder für die eine von der als verlässlich angenommenen Anhänger-Achskonfiguration abweichende Anhänger-Achskonfiguration übertragen wurde, kann die Positionszuordnung dieser Reifen-Sensor-Module im Zwischenspeicher des Steuergerätes gelöscht werden, da eine positionsgebundene Anzeige von Reifenzuständen und/oder Sensor-Modul-Zuständen für diese Reifen-Sensor-Module zu unsicher ist, da unklar ist, von welchem bzw. welchen Reifen-Sensor-Modulen der entsprechende Reifenzustand und/oder Sensor-Modul-Zustand übertragen wird. Weiterhin kann ergänzend eine Fehlermeldung ausgegeben werden. Die einfache Anhänger-Erkennung ist dann abgeschlossen, wobei eine Anzeige von Reifenzuständen und/oder Reifen-Sensor-Modul-Zuständen für diese Reifen-Sensor-Module in diesem Fall neben der Ausgabe der Fehlermeldung wahlweise beispielsweise positionsungebunden erfolgen kann, so dass dem Fahrer immerhin angezeigt werden kann, dass ein Fehler vorliegt.

Alternativ kann statt der Annahme einer verlässlichen Anhänger-Achskonfiguration die Positionszuordnung der Reifen-Sensor-Module vollständig im Zwischenspeicher des Steuergerätes gelöscht werden, wenn beispielsweise durch eine Abwägung festgestellt wird, dass eine solche Annahme zu unsicher ist. Denn auch dann ist eine positionsgebundene Anzeige von Reifenzuständen und/oder Sensor-Modul-Zuständen für diese Reifen-Sensor-Module zu unsicher, da unklar ist, von welchem bzw. welchen Reifen-Sensor-Modulen der entsprechende Reifenzustand und/oder Sensor-Modul-Zustand übertragen wird. Weiterhin kann ergänzend eine Fehlermeldung ausgegeben werden. Die einfache Anhänger-Erkennung ist dann abgeschlossen, wobei eine Anzeige von Reifenzuständen und/oder Reifen-Sensor-Modul-Zuständen in diesem Fall neben der Ausgabe der Fehlermeldung wahlweise beispielsweise positionsungebunden erfolgen kann, so dass dem Fahrer immerhin angezeigt werden kann, dass ein Fehler vorliegt.

Wurde erkannt, dass einzelne dem eigenen Anhängerfahrzeug zugeordnete Reifen-Sensor-Module keine Radposition über das Datentelegramm übertragen und/oder von dem eigenen Anhängerfahrzeug zugeordneten Reifen-Sensor-Modulen nicht alle Radpositionen, die gemäß der Anhänger-Achskonfiguration zu erwarten sind, übertragen werden und/oder bei einigen dem eigenen Anhängerfahrzeug zugeordneten Reifen-Sensor-Modulen dieselbe Radposition hinterlegt ist, d.h. eine Radposition durch mehrere Reifen-Sensor-Module mehrfach belegt ist, wird lediglich den Reifen-Sensor-Modulen eine Position zugeordnet, die eine Radposition übertragen und deren Radposition nicht mehrfach belegt ist. Für alle anderen Reifen-Sensor-Module kann eine Fehlermeldung ausgegeben werden. Die einfache Anhänger-Erkennung ist dann abgeschlossen, wobei eine Anzeige von Reifenzuständen und/oder Reifen-Sensor-Modul-Zuständen für diese Reifen-Sensor-Module in diesem Fall neben der Ausgabe der Fehlermeldung wahlweise beispielsweise positionsungebunden erfolgen kann, so dass dem Fahrer immerhin angezeigt werden kann, dass ein Fehler vorliegt.

Alternativ wird je nach Abwägung die Positionszuordnung aller Reifen-Sensor-Module vollständig im Zwischenspeicher des Steuergerätes gelöscht und ggf. eine Fehlermeldung ausgegeben. Dann erfolgt eine positionsungebundene Anzeige für alle Reifen-Sensor-Module.

Nach abgeschlossener einfacher Anhänger-Erkennung, bei der den Reifen-Sensor-Modulen über die Reifenposition und die Anhänger-Achskonfiguration die Position am eigenen Anhängerfahrzeug entsprechend den obigen Kriterien zugeordnet wurden, kann vorteilhafterweise mit den Reifen-Sensor-Modulen ein Überwachen von Reifenzuständen und/oder von Reifen-Sensor-Modul-Zuständen erfolgen, wobei dazu die Datentelegramme von den dem eigenen Anhängerfahrzeug zugeordneten Reifen-Sensor-Modulen ausgewertet und die jeweiligen Reifenzustände und/oder die Reifen-Sensor-Modul-Zustände über ein Statussignal ausgegeben werden, um dem Fahrer die Reifenzustände und/oder die Reifen-Sensor-Modul-Zustände anzuzeigen. Dabei kann eine positionsgebundene Ausgabe und Anzeige für die Reifen-Sensor-Module erfolgen, denen eine Position zugeordnet wurde, und für alle anderen Reifen-Sensor-Module eine positionsunabhängige Ausgabe und Anzeige erfolgen, beispielsweise wenn bei der o.g. Plausibilisierung eine Unstimmigkeit festgestellt wurde, der Fahrer aber dennoch gewarnt werden soll.

Gemäß einer weiteren Ausführungsform, die eine erweiterte Anhänger-Erkennung angibt, wird zum Bewerten der Datentelegramme, um festzustellen, ob das Reifen-Sensor-Modul dem eigenen Anhängerfahrzeug oder einem benachbarten Anhängerfahrzeug zugeordnet ist, zusätzlich eine über das Datentelegramm übertragene Anhänger-Bezeichnung berücksichtigt. Jedem Reifen-Sensor-Modul wird dazu bereits während des Hochzählens der Anzahl an erfassten Datentelegrammen, d.h. bereits bevor die Bewertung bei Erreichen des Maximal-Zählers gestartet wird, neben der Sensor-Identifikation auch die Anhänger-Achskonfiguration, die Reifenposition und die Anhänger-Bezeichnung zugeordnet. Dazu können während des Hochzählens der empfangenen Datentelegramme die Anhänger-Achskonfiguration, die Reifenposition und die Anhänger-Bezeichnung zu der entsprechenden Sensor-Identifikation auf einem Steuergerät zwischengespeichert werden.

Im Gegensatz zu der einfachen Anhänger-Erkennung werden in der erweiterten Anhänger-Erkennung die Anhänger-Achskonfiguration sowie die Reifenposition nicht erst nach der abgeschlossenen erweiterten Anhänger-Erkennung bzw. nach dem Akzeptieren der Reifen-Sensor-Module zum nachträglichen Plausibilisieren und zur positionsgebundenen Anzeige berücksichtigt, sondern bereits von Anfang an. Außerdem erfolgt eine Zuordnung der Anhänger-Bezeichnung zur Sensor-Identifikation, um vorteilhafterweise eine Filterung von Reifen-Sensor-Modulen anhand einer weiteren auf dem Reifen-Sensor-Modul gespeicherten Information zu ermöglichen.

Dadurch kann die erweiterte Anhänger-Erkennung vorteilhafterweise beschleunigt werden: Denn einzelne Reifen-Sensor-Module können unmittelbar bei Erreichen des Maximal-Zählers, d.h. wenn die Bewertung gestartet wird, ausgeschlossen oder dem eigenen Anhängerfahrzeug zugeordnet werden, indem anhand der zusätzlichen Informationen gewisse Kriterien geprüft werden.

Demnach können gemäß einer vorteilhaften Weiterbildung die jeweilig erkannten Reifen-Sensor-Module dem eigenen Anhängerfahrzeug bereits dann zugeordnet werden und die erweiterte Anhänger-Erkennung bereits dann abgeschlossen werden, wenn bis zum Erreichen des Maximal-Zählers lediglich Datentelegramme von Reifen-Sensor-Modulen erfasst wurden, die dieselbe Anhänger-Bezeichnung, dieselbe Anhänger-Achskonfiguration sowie zur Anhänger-Achskonfiguration passende Radpositionen übertragen.

Der Maximal-Zähler kann hierzu vorteilhafterweise auf zwischen zwei und fünfzig, insbesondere zwischen zwei und zehn festgelegt werden, da für den Fall, dass nur Datentelegramme mit lediglich einer Anhänger-Bezeichnung, einer Anhänger-Achskonfiguration sowie alle dazu passenden Reifenpositionen empfangen werden, zu erwarten ist, dass selbst nach längerem Hochzählen die erweiterte Anhänger-Erkennung kein anderes Ergebnis liefert. Somit kann die erweiterte Anhänger-Erkennung schneller beendet werden und eine Anzeige von Reifenzuständen und Reifen-Sensor-Modulzuständen erfolgen.

Gemäß einer vorteilhaften Weiterbildung können die jeweilig erkannten Reifen-Sensor-Module dem eigenen Anhängerfahrzeug bereits dann zugeordnet werden und die erweiterte Anhänger-Erkennung bereits dann abgeschlossen werden, wenn bei Erreichen des Maximal-Zählers anhand der Sensor-Identifikation, der Anhänger-Bezeichnung, der Anhänger-Achskonfiguration sowie der passenden Reifenpositionen festgestellt wird, dass lediglich Datentelegramme von Reifen-Sensor-Modulen erfasst wurden, die bereits vorher als zum eigenen Anhängerfahrzeug zugehörig erkannt wurden. Dadurch kann vorteilhafterweise ein bekannter bereits angelernter Anhänger, dessen Daten noch im Steuergerät abgespeichert sind, schneller wiedererkannt werden und die erweiterte Anhänger-Erkennung vorzeitig beendet werden. Somit wird eine zusätzliche Information, nämlich die abgespeicherten Daten zum zuletzt angelernten Anhängerfahrzeug, herangezogen, um die Zuverlässigkeit bei der erweiterten Anhänger-Erkennung zu erhöhen.

Gemäß einer vorteilhaften Ausbildung können die jeweiligen Reifen-Sensor-Module dem eigenen Anhängerfahrzeug bereits dann zugeordnet werden und die erweiterte Anhänger-Erkennung bereits dann abgeschlossen werden, wenn bei Erreichen des Maximal-Zählers, festgestellt wird, dass über die Datentelegramme lediglich eine einzige Anhänger-Bezeichnung und eine einzige Anhänger-Achskonfiguration übertragen werden und Datentelegramme von zumindest einer maximalen Modul-Anzahl unterschiedlicher Reifen-Sensor-Module empfangen wurden. Die maximale Modul-Anzahl kann hierbei einem beliebigen Wert zwischen null und der aufgrund der Anhänger-Achskonfiguration zu erwartenden Anzahl an Reifen-Sensor-Modulen entsprechen, beispielsweise einem Faktor zwischen 0,05 und 0,99, insbesondere 0,5, multipliziert mit der aufgrund der Anhänger-Achskonfiguration zu erwartenden Anzahl an Reifen-Sensor-Modulen. Auch hierdurch kann die Zeit für die Anhänger-Erkennung minimiert werden und gleichzeitig eine zuverlässige Anhänger-Erkennung erfolgen, da zu erwarten ist, dass ein längeres Hochzählen kein anderes Ergebnis liefert.

Eine Anzeige von Reifenzuständen und Reifen-Sensor-Modul-Zuständen erfolgt dann zunächst lediglich anhand der erkannten Reifen-Sensor-Module. Im Hintergrund werden weiter Reifen-Sensor-Module erfasst und falls diese zum eigenen Anhängerfahrzeug passen, d.h. die Anhänger-Bezeichnung, die Anhänger-Achskonfiguration und die Reifenpositionen stimmig sind, und keine sonstigen Inkonsistenzen auftreten, erfolgt auch für diese Reifen-Sensor-Module eine Anzeige von Reifenzuständen und Reifen-Sensor-Modulzuständen.

Gemäß einer vorteilhaften Weiterbildung können die jeweiligen Reifen-Sensor-Module dem eigenen Anhängerfahrzeug bereits dann zugeordnet werden und die erweiterte Anhänger-Erkennung bereits dann abgeschlossen werden, wenn bei Erreichen des Maximal-Zählers festgestellt wird, dass über die Datentelegramme höchstens zwei Anhänger-Bezeichnungen übertragen werden, wobei für eine Anhänger-Bezeichnung Datentelegramme von allen aufgrund der Anhänger-Achskonfiguration zu erwartenden Anzahl von Reifen-Sensor-Modulen erfasst werden und für die andere Anhänger-Bezeichnung weniger als ein Grenzprozentsatz, beispielsweise 30% oder 40%, der aufgrund der Anhänger-Achskonfiguration für diese Anhänger-Bezeichnung zu erwartenden Anzahl an Reifen-Sensor-Modulen.

In diesem Fall werden die Reifen-Sensor-Module, denen die eine Anhänger-Bezeichnung zugeordnet ist, bei der für alle Radpositionen Reifen-Sensor-Module empfangen wurden, dem eigenen Anhängerfahrzeug zugeordnet und die Reifen-Sensor-Module mit der anderen Anhänger-Bezeichnung im Zwischenspeicher des Steuergerätes gelöscht. Somit kann eine Anzeige von allen Reifen-Sensor-Modulen des eigenen Anhängerfahrzeuges stattfinden.

Somit kann bei Erfüllen der genannten Kriterien in einigen Ausnahmefällen die erweiterte Anhänger-Erkennung vorzeitig abgeschlossen werden und eine Anzeige der entsprechenden Informationen an den Fahrer früher erfolgen.

Die erweiterte Anhänger-Erkennung kann aber unter bestimmten Bedingungen auch vorzeitig abgebrochen werden, beispielsweise wenn festgestellt wird, dass diese zu keinem schnellen und zuverlässigen Ergebnis führt:
Wird demnach gemäß einer vorteilhaften Weiterbildung festgestellt, dass bei Erreichen des Maximal-Zählers Datentelegramme mit drei oder mehreren unterschiedlichen Anhänger-Bezeichnungen empfangen wurden, kann die erweiterter Anhänger-Erkennung abgebrochen werden, und es wird auf die oben beschriebene, einfache Anhänger-Erkennung zurückgegangen, um eine zuverlässige Anhänger-Erkennung zu ermöglichen. Dasselbe gilt für den Fall, dass über die Datentelegramme genau zwei Anhänger-Bezeichnungen übertragen werden, wobei für eine Anhänger-Bezeichnung Datentelegramme von allen aufgrund der Anhänger-Achskonfiguration zu erwartenden Anzahl von Reifen-Sensor-Modulen erfasst wurden und für die zweite Anhänger-Bezeichnung eine Anzahl an Reifen-Sensor-Modulen erfasst wurde, die größer oder gleich einem Grenzprozentsatz, beispielsweise 30% oder 40%, ist, der sich aus der zu erwartenden Anzahl aufgrund der Anhänger-Achskonfiguration für die zweite Anhänger-Bezeichnung ergibt.

Um die erweiterte Anhänger-Erkennung in diesen Fällen nicht unnötigerweise abzubrechen, wenn sich das Fahrzeug-Gespann noch im Stillstand befindet, ist vorzugsweise vorgesehen, den Empfang von zwei oder mehreren unterschiedlichen Anhänger-Bezeichnungen abzusichern, indem dieses Ergebnis nach Fahrtbeginn plausibilisiert wird. D.h. es wird gewartet, bis sich das Fahrzeug-Gespann in Bewegung gesetzt hat, und die erweiterte Anhänger-Erkennung wird erst dann abgebrochen, wenn auch dann noch zwei oder mehrere verschiedene Anhänger-Bezeichnungen erkannt und die oben beschriebenen Bedingungen erfüllt werden.

Lediglich bei Feststellen von Inkonsistenzen kann die erweiterte Anhänger-Erkennung auch bereits im Stillstand abgebrochen werden. Gemäß einer vorteilhaften Weiterbildung ist demnach vorgesehen, dass die Bewertung der Datentelegramme in Abhängigkeit der Anhänger-Bezeichnung, der Radposition sowie der Anhänger-Achskonfiguration abgebrochen wird, falls mindestens zwei unterschiedliche Reifen-Sensor-Module dieselbe Reifen-Position und dieselbe Anhänger-Achskonfiguration und dieselbe Anhänger-Bezeichnung übertragen oder bei gleicher Anhänger-Bezeichnung unterschiedliche Anhänger-Achskonfigurationen vorliegen. In diesem Fall wird eine schnelle Beendigung der erweiterten Anhänger-Erkennung zu keinem zuverlässigen Ergebnis führen, so dass stattdessen auf die einfache Anhänger-Erkennung ohne Berücksichtigung der Anhänger-Bezeichnung ausgewichen wird bzw. ggf. eine positionsungebundene Anzeige der Reifenzustände und/oder Reifen-Sensor-Modul-Zustände erfolgt, was in der oben beschriebenen Plausibilisierung bewertet wird.

Gemäß einer vorteilhaften Weiterbildung kann die Bewertung der Datentelegramme nach Erreichen des Maximal-Zählers im Rahmen dieser erweiterten Anhänger-Erkennung in Abhängigkeit der Anhänger-Bezeichnung, der Radposition sowie der Anhänger-Achskonfiguration im Stillstand und/oder während der Fahrt stattfinden, wobei im Stillstand nur Datentelegramme von Reifen-Sensor-Modulen berücksichtigt werden, die sich auch im Stillstand befinden, und während der Fahrt nur Datentelegramme von Reifen-Sensor-Modulen berücksichtigt werden, die sich in Bewegung befinden.

Gemäß einer vorteilhaften Ausführungsform können beim Hochzählen der Anzahl an erfassten Datentelegrammen nach Fahrtbeginn all diejenigen Datentelegramme von Reifen-Sensor-Modulen unberücksichtigt gelassen werden, die eine Anhänger-Bezeichnung aufweisen, die nach Fahrtbeginn nicht mehr erkannt wird. Dadurch kann Zeit und Rechenaufwand gespart werden, da die Überwachung einer Vielzahl an irrelevanten Reifen-Sensor-Modulen gestoppt werden kann und diese daher bei der Bewertung nicht mehr zu berücksichtigen sind. Insbesondere können dadurch Reifen-Sensor-Module unberücksichtigt bleiben, die - nachdem das eigene Fahrzeug-Gespann den Bewegungszustand geändert hat - ihren Bewegungszustand nicht geändert haben.

Dadurch kann die Anzahl der erfassten Reifen-Sensor-Module verringert werden, beispielsweise dann, wenn sich das eigene Fahrzeug-Gespann auf einem Parkplatz befindet.

Dazu wird vorteilhafterweise die Anzahl an erfassten Datentelegrammen für jedes Reifen-Sensor-Modul im Stillstand in einem Stillstand-Zähler hochgezählt und nach Fahrtbeginn in einem Fahrend-Zähler, wobei der Fahrend-Zähler den Stillstand-Zähler für all diejenigen Reifen-Sensor-Module übernimmt, von denen bereits im Stillstand Datentelegramme erfasst wurden und die ebenfalls die Fahrt begonnen haben. Dazu kann der Stillstand-Zähler beispielsweise auf den Fahrend-Zähler, der auch null sein kann, wenn während der Fahrt noch keine Datentelegramme erfasst wurden, aufaddiert werden. Dadurch kann vorteilhafterweise Zeit gespart werden, da für bereits erkannte Reifen-Sensor-Module nicht von null losgezählt werden muss, sobald sich das eigene Fahrzeug-Gespann in Bewegung setzt.

Weiterhin kann vorgesehen sein, dass die Bewertung erst dann beginnt, wenn sich das Fahrzeug-Gespann auch bewegt. D.h. wird während des Stillstands der Maximal-Zähler bereits erreicht, wird dennoch gewartet, bis das Fahrzeug sich zu bewegen beginnt.

Dadurch kann vorteilhafterweise sichergestellt werden, dass ein während des Stillstands gültiger Zustand bezüglich der Reifen-Sensor-Module, der zu einem Abschluss oder zu einem Abbruch der erweiterten Anhänger-Erkennung führen würde, während der Fahrt auch noch eingehalten wird. Die erweiterte Anhänger-Erkennung wird dadurch zuverlässiger.

Gemäß einer vorteilhaften Ausbildung wird dazu die Bewertung erst dann gestartet und der Stillstand-Zähler erst dann auf den Fahrend-Zähler aufaddiert, wenn während der Fahrt zumindest eine Mindest-Anzahl an Datentelegrammen eines Reifen-Sensor-Moduls empfangen wurde, wobei die Mindest-Anzahl zwischen eins und dreißig, insbesondere zwischen zwei und zehn, liegt. D.h. es wird gewartet, bis auch während der Fahrt noch eine gewisse Anzahl an Datentelegrammen empfangen wurde, und erst dann wird mit der Bewertung gestartet und der Fahrend-Zähler mit dem Sillstand-Zähler aufaddiert.

Durch das Warten bis zur Mindest-Anzahl kann die erweiterte Anhänger-Erkennung zuverlässiger gestaltet werden, da beispielsweise sich ebenfalls in Bewegung setzenden Anhängerfahrzeuge nach einer gewissen Zeit, d.h. nach Erreichen der Mindest-Anzahl, nicht mehr im Überwachungsbereich befinden.

Gemäß einer bevorzugten Ausbildung kann vorgesehen sein, unterschiedliche Maximal-Zähler und/oder Mindest-Zähler für die einzelnen Bewertungen im Rahmen der erweiterten Anhänger-Erkennung zu wählen. So kann jeder Überprüfung genügend Zeit gegeben werden, um ein sicheres Ergebnis für eine schnelle Anhänger-Erkennung zu liefern.

Gemäß einer vorteilhaften Ausbildung der erweiterten Anhänger-Erkennung können die jeweiligen Reifen-Sensor-Module dem eigenen Anhängerfahrzeug bereits dann zugeordnet werden und die erweiterte Anhänger-Erkennung bereits dann abgeschlossen werden, wenn bei Erreichen des Maximal-Zählers, von zwischen zwei und fünfzig, insbesondere zwischen zehn und fünfzig, für ein Reifen-Sensor-Modul mit einer bestimmten Anhänger-Bezeichnung festgestellt wird, dass die Anzahl an bis dahin insgesamt erkannten Reifen-Sensor-Modulen mit derselben Anhänger-Bezeichnung wie für dieses eine Reifen-Sensor-Modul mit der Anzahl der aufgrund der Anhänger-Achskonfiguration für dieses eine Reifen-Sensor-Modul zu erwartenden Anzahl an Reifen übereinstimmt. In diesem Fall werden lediglich die Reifen-Sensor-Module mit dieser Anhänger-Bezeichnung in Abhängigkeit der Anhänger-Achskonfiguration an den Fahrer dargestellt.

Dadurch kann die erweiterte Anhänger-Erkennung vorteilhafterweise beschleunigt werden, denn anhand der Anhänger-Bezeichnungen findet eine plausible Filterung statt, bei der mit hoher Wahrscheinlichkeit Reifen-Sensor-Module mit nicht passender Anhänger-Bezeichnung ignoriert werden. Dabei wird angenommen, dass das erste Reifen-Sensor-Modul, das den Maximal-Zähler erreicht, zum eigenen Anhänger-Fahrzeug gehört. Dazu passende Reifen-Sensor-Module, d.h. mit derselben Anhänger-Bezeichnung, werden dann ebenfalls akzeptiert, auch wenn deren Zählerstand ggf. deutlich unterhalb des Maximal-Zähler-Wertes liegt.

Gemäß einer vorteilhaften Weiterbildung kann für die weiteren Reifen-Sensor-Module, die dieselbe Anhänger-Bezeichnung aufweisen, zusätzlich gefordert werden, dass auch für diese Reifen-Sensor-Module genügend Datentelegrammen zu empfangen sind, bevor auch diese tatsächlich akzeptiert werden.

Gemäß einer vorteilhaften Ausführungsform kann für den Fall vorgesehen sein, dass die Anzahl an bis dahin insgesamt erkannten Reifen-Sensor-Modulen mit derselben Anhänger-Bezeichnung noch nicht mit der Anzahl der aufgrund der Anhänger-Achskonfiguration für dieses Reifen-Sensor-Modul zu erwartenden Anzahl an Reifen übereinstimmt, die erweiterte Anhänger-Erkennung dennoch abzuschließen und die noch fehlenden Reifen-Sensor-Module erst dann zu akzeptieren, wenn Datentelegramme von diesen Reifen-Sensor-Modulen empfangen wurden. Bis dahin kann bereits das gesamte Anhängerfahrzeug mit seiner Anhänger-Achskonfiguration dargestellt werden und die Daten der fehlenden Reifen-Sensor-Module werden so lange nicht dargestellt, bis diese empfangen werden.

Dadurch kann vorteilhafterweise erreicht werden, dass bei Anhängerfahrzeugen mit einer Liftachse, dessen Reifen-Sensor-Module bei der Fahrt zwar empfangen, aufgrund des abweichenden Bewegungszustandes bei der erweiterten Anhänger-Erkennung aber nicht berücksichtigt werden, der Abschluss der erweiterten Anhänger-Erkennung nicht unnötig hinausgezögert wird, weil die volle Anzahl an zu erwartenden Reifen-Sensor-Modulen tatsächlich noch nicht erkannt werden konnte. Weiterhin kann es vorkommen, dass einzelne Reifen-Sensor-Module sehr schlecht empfangen werden können. Um insbesondere in diesem beiden Fällen bereits vorab eine Information der Reifenzustände und/oder Reifen-Sensor-Zustände von den bereits empfangenen Reifen-Sensor-Modulen zu ermöglichen, ist eine vorzeitige Beendigung vorteilhaft.

Bei der erweiterten Anhänger-Erkennung können - wie auch bei der einfachen Anhänger-Erkennung - vor dem Abschluss der erweiterten Anhänger-Erkennung ergänzend auch durch die oben beschriebene Plausibilisierung Inkonsistenzen geprüft werden, z.B. ob zwei Reifen-Sensor-Module dieselbe Reifenposition übertragen, etc. Erst wenn keine Inkonsistenzen festgestellt wurden, ist die erweiterte Anhänger-Erkennung abgeschlossen, und es kann eine positionsbezogene Anzeige von Reifenzuständen und/oder Reifen-Sensor-Modul-Zuständen stattfinden.

Treten Inkonsistenzen auf, kann eine Fehlermeldung für die entsprechenden Reifen-Sensor-Module ausgegeben werden. Die erweiterte Anhänger-Erkennung wird dann abgebrochen und die einfache Anhänger-Erkennung weitergeführt, so dass eine Anzeige von Reifenzuständen und/oder Reifen-Sensor-Modul-Zuständen für diese Reifen-Sensor-Module in diesem Fall wahlweise beispielsweise positionsungebunden erfolgen kann, so dass dem Fahrer immerhin angezeigt werden kann, dass ein Fehler vorliegt.

Anhand von Ausführungsbeispielen soll die Erfindung im Folgenden näher erläutert werden. Es zeigen:
- Fig. 1: mehrere benachbarte Nutzfahrzeug-Gespanne;
- Fig. 2a, b, c: beispielhafte Darstellungen von Anhänger-Achskonfigurationen;
- Fig. 3: ein Flussdiagramm einer einfachen Anhänger-Erkennung ;
- Fig. 4: ein Flussdiagramm einer Plausibilitätsprüfung; und
- Fig. 5: Ein Flussdiagramm einer erweiterten Anhänger-Erkennung.

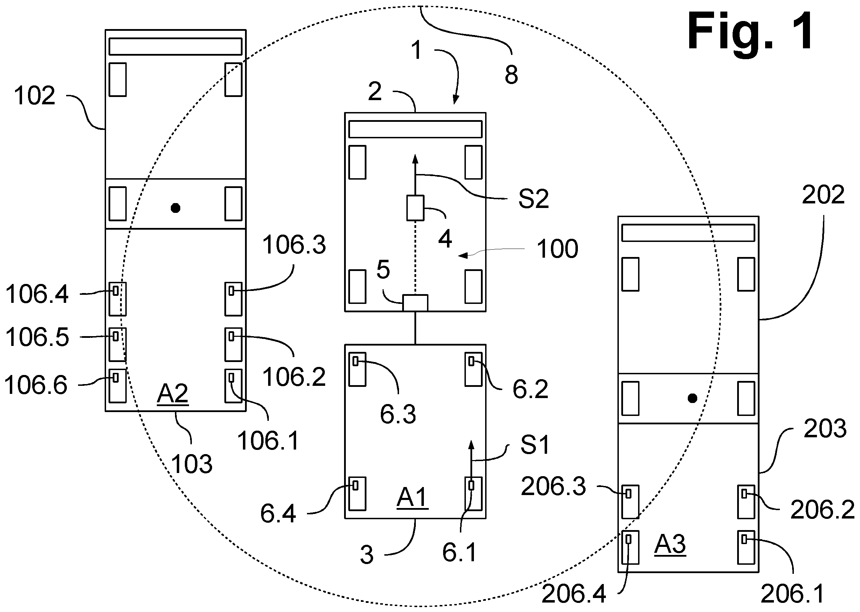

Figur 1 zeigt ein Nutzfahrzeug-Gespann 1 mit einem Zugfahrzeug 2 und einem Anhängerfahrzeug 3. Das Zugfahrzeug 2 bzw. die Zugmaschine kann z.B. eine Sattelzugmaschine, ein normaler LKW (Kastenwagen), ein Bus, ein Gabelstapler, etc. sein. Das Anhängerfahrzeug 3 ist gemäß dieser Ausführungsform als ein zweiachsiger Anhänger ausgeführt, der über eine Deichsel mit dem Zugfahrzeug 2 verbunden ist. Es können aber auch andere Ausführungen des Nutzfahrzeug-Gespanns 1 vorgesehen sein, beispielsweise eine Sattelzugmaschine als Zugfahrzeug 2 mit einem ein- oder mehrachsigen Auflieger als Anhängerfahrzeug 3 oder ein vierachsiger Deichsel-Anhänger als Anhängerfahrzeug 3. Somit sind unterschiedliche Anhänger-Achskonfigurationen AKonf für das Anhängerfahrzeug 3 möglich.

An dem Zugfahrzeug 2 ist ein Steuergerät 4 (ECU) vorgesehen, das mit einem oder mehreren Empfangsmodulen 5 verbunden ist. Im Steuergerät 4 kann ebenfalls ein nicht dargestelltes Empfangsmodul enthalten sein. Das Empfangsmodul 5 ist hierbei vorzugsweise an einem hinteren Ende des Zugfahrzeuges 2 angeordnet. Das Empfangsmodul 5 ist ausgebildet, ein Datentelegramm S1 von Reifen-Sensor-Modulen 6.i, mit i=1 bis 4 an Reifen am eigenen Anhängerfahrzeug 3 oder von umliegenden Reifen-Sensor-Modulen 106.i, 206.i an Reifen von benachbarten Anhängerfahrzeugen 103, 203 zu empfangen und an das Steuergerät 4 weiterzuleiten, wobei der Index "i" einem Reifen am jeweiligen Anhängerfahrzeug 3, 103, 203 zugeordnet ist, der auch ein Reifen-Sensor-Modul 6.i, 106.i, 206.i aufweist.

Gemäß Fig. 1 sind die Reifen-Sensor-Module 6.i, 106.i, 206.i beispielhaft lediglich an den Reifen der Anhängerfahrzeuge 3, 103, 203 gezeigt. Grundsätzlich können auch an den jeweiligen Zugfahrzeugen 2, 102, 202 Reifen-Sensor-Module angeordnet sein. Diese sind jedoch für den erfindungsgemäßen Gegenstand nicht relevant. Im Rahmen der Erfindung wird davon ausgegangen, dass das Steuergerät 4 die von einem Reifen-Sensor-Modul am Zugfahrzeug 2, 102, 202 ausgehenden Datentelegramme S1 herausfiltern kann, indem es überprüft, ob über ein empfangenes Datentelegramm S1 eine Zugfahrzeug-Zugehörigkeit übertragen wird. Ist dies der Fall, kann dieses Datentelegramm S1 für gewisse Funktionen auf dem Steuergerät 4, beispielsweise für eine Anhänger-Erkennung, unberücksichtigt bleiben. Aufgrund dessen wird auf eine Darstellung der Reifen-Sensor-Module am Zugfahrzeug 2, 102, 202 verzichtet.

Die Reifen-Sensor-Module 6.i, 106.i, 206.i können Reifenzustände, wie beispielsweise einen Reifendruck p, eine Reifentemperatur T sowie mechanische Spannungen s von den Reifen, an denen sie angeordnet sind, erfassen, die erfassten Reifenzustände p, T, s verarbeiten und über das Datentelegramm S1 drahtlos, beispielsweise über ein hochfrequentes Funksignal, ausgeben. Weiterhin können über das Datentelegramm S1 eine Sensor-Identifikation ID.i bzw. eine Sensor-Kennung, ein kritischer Reifen-Sensor-Modul-Zustand, beispielsweise ein Sensor-Defekt, oder ein loses Reifen-Sensor-Modul 6.i, 106.i, 206.i sowie ein Bewegungszustand des jeweiligen Reifens ausgegeben werden.

Außerdem ist vorgesehen, nach dem Montieren der Reifen an das jeweilige Anhängerfahrzeug 3, 103, 203 eine Radposition R.i, die Anhänger-Achskonfiguration AKonf, sowie eine Anhänger-Bezeichnung B auf dem entsprechenden Reifen-Sensor-Modul 6.i, 106.i, 206.i zu speichern. Der Index "i" in der Sensor-Identifikation ID.i sowie der Radposition R.i gibt dabei die Zuordnung zu einem bestimmten Reifen des jeweiligen Anhängerfahrzeuges 3, 103, 203 an. Ebenso wird gespeichert, ob das Reifen-Sensor-Modul 6.i, 106.i, 206.i an einem Reifen des Anhängerfahrzeuges 3, 103, 203 oder des Zugfahrzeuges 2, 102, 202 angeordnet ist, um die o.g. Zugfahrzeug-Zugehörigkeit ermitteln zu können.

Somit ist nach dieser Systematik in dem Ausführungsbeispiel gemäß Fig. 1 auf dem ersten Reifen-Sensor-Modul 6.1 des eigenen Anhängerfahrzeuges 3 als Radposition R.1 beispielsweise "hinten rechts" gespeichert, als Achskonfiguration AKonf "zweiachsig, je einzeln bereift, Deichsel", und als Anhänger-Bezeichnung B "A1", wobei die Anhänger-Bezeichnung B lediglich beispielhaft gewählt ist. Für das dritte Reifen-Sensor-Modul 6.3 entsprechend R.3 = "vorne links", AKonf = "zweiachsig, je einzeln bereift, Deichsel" und B = "A1". Für das benachbarte linke Anhängerfahrzeug 103 in Fig. 1 ist auf jedem Reifen-Sensor-Modul 106.i die Achskonfiguration AKonf = "dreiachsig, je einzeln bereift, Auflieger" gespeichert sowie die Anhänger-Bezeichnung B = "A2". Die Radpositionen R.i sind entsprechend den Positionen auf den Achsen in geeigneter Weise in Bezug zum Index i abgespeichert. Für das benachbarte rechte Anhängerfahrzeug 203 ist auf jedem Reifen-Sensor-Modul 206.i die Achskonfiguration AKonf = "zweiachsig, je einzeln bereift, Auflieger" gespeichert sowie die Anhänger-Bezeichnung B = "A3". Die Radpositionen R.i sind entsprechend den Positionen auf den Achsen in Bezug zum Index i in geeigneter Weise abgespeichert.

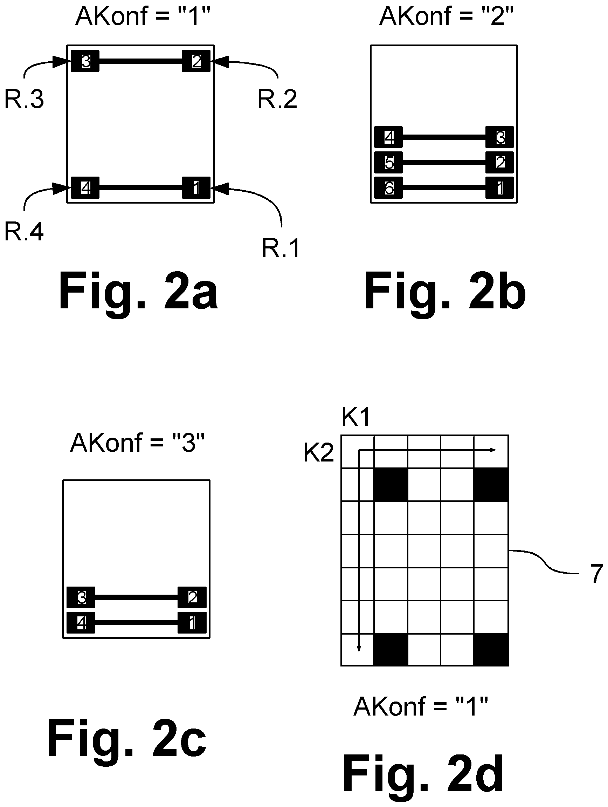

Um die Übertragung der o.g. Informationen über das Datentelegramm S1 zu optimieren, d.h. den Datenumfang zu minimieren, kann die Datenübertragung codiert erfolgen. Gemäß Fig. 2a, b, c sind für die in Fig. 1 dargestellten Anhängerfahrzeuge 3, 103, 203 beispielhafte Anhänger-Achskonfigurationen AKonf mit zugewiesenen Radpositionen R.i dargestellt, die auf dem Steuergerät 4 hinterlegt sind. Die dargestellten Anhänger-Achskonfigurationen AKonf sind lediglich beispielhaft und können je nach Achsanzahl und Achslage sowie Bereifung, d. h. Einfachbereifung oder Doppelbereifung, beliebig erweitert werden.

Für das eigene Anhängerfahrzeug 3 in Fig. 1 ist die Anhänger-Achskonfiguration AKonf, der im Steuergerät 4 die Anhänger-Achskonfiguration AKonf mit dem Wert "1" zugewiesen ist, gemäß Fig. 2a einschlägig. Dieser Anhänger-Achskonfiguration AKonf = "1" sind in eindeutiger Weise vier Radpositionen R.i = "1", "2", "3", "4" zugeordnet. Auf dem ersten Reifen-Sensor-Modul 6.1 des eigenen Anhängerfahrzeuges 3 ist es nun ausreichend, für die Anhänger-Achskonfiguration AKonf den Wert "1", für die Radposition R.1 den Wert "1" (entspricht dem Index i) und für die Bezeichnung B den Wert "A1" zu speichern. Diese können dann in entsprechender Weise über das Datentelegramm S1 an das Überwachungssystem 100 übertragen werden. Sobald das Steuergerät 4 die Anhänger-Achskonfiguration AKonf = "1" ausliest, wird in die Darstellung gemäß Fig. 2a gewechselt und anhand des Wertes "1" für die Radposition R.1 erkannt, dass es sich um den hinteren rechten Reifen handelt. Somit ist mit nur wenigen übertragenen Informationen eine eindeutige Positionszuordnung des ersten Reifen-Sensor-Moduls 6.1 anhand der hinterlegten Darstellung gemäß Fig. 2a möglich.

Entsprechend ist für das linke Anhängerfahrzeug 103 die Fig. 2b, d.h. AKonf = "2", und für das rechte Anhängerfahrzeug 203 die Fig. 2c, d.h. AKonf = "3", einschlägig, nach deren Systematik die entsprechenden Werte für die Anhänger-Achskonfiguration AKonf und die Radposition R.i auf den Reifen-Sensor-Modulen 106.i, 206.i der benachbarten Anhängerfahrzeugen 103, 203 eingespeichert sind, wobei auch hier der Index "i" wieder den Reifen am entsprechenden Anhängerfahrzeug 1 angibt.

Somit kann der Datenumfang der übertragenen Daten sowie auch der gespeicherten Daten minimiert werden, was die Kommunikation zwischen dem Steuergerät 4 und den Reifen-Sensor-Modulen 6.i, 106.i, 206.i erleichtert und eine schnellere Datenübertragung ermöglicht.

Alternativ kann auch eine beliebige andere Koordinatenbeschreibung für die Radpositionen R.i verwendet werden. In Fig. 2d ist dazu beispielhaft für die Anhänger-Achskonfiguration AKonf = "1" ein für Radpositionen R.i verwendbares Koordinatensystem 7 gezeigt. Darüber können den Rädern eindeutige Positionen mit zwei Koordinaten K1, K2, d.h. einem Koordinatenpaar, zugeordnet werden. Die Anhänger-Achskonfiguration AKonf wird in diesem Fall neben den Koordinaten K1, K2 weiterhin über das Datentelegramm S1 übertragen, um festzustellen, ob Radpositionen R.i für alle Fahrzeugachsen empfangen werden konnten oder einzelne Reifen-Sensor-Module 6.i, 106.i, 206.i keine Daten übermitteln.

Falls aufgrund der Anzahl der Werte für die Radpositionen R.i, die Anhänger-Achskonfiguration AKonf und insbesondere die Anhänger-Bezeichnung B ein für diese Informationen verfügbarer Abschnitt im Datentelegramm S1 von beispielsweise 8bit überstiegen wird, können diese Informationen R.i, AKonf, B auch auf mehrere Datentelegramme S1 aufgeteilt werden, wobei für die unterschiedlichen Inhalte innerhalb eines Datentelegramms jeweils derselbe Abschnitt verwendet wird. Demnach wird beispielweise in einem Datentelegramm S1 die Anhänger-Achskonfiguration AKonf und in einem weiteren, vorzugsweise nachfolgenden, Datentelegramm S1 in demselben Abschnitt des Datentelegramms S1 die Radposition R.i übertragen.

Um Fehlinterpretationen der vom Steuergerät 4 des Überwachungssystems 100 empfangenen Datentelegramme S1 zu vermeiden, wird beispielsweise über ein Identifikationsbit angezeigt, welcher Inhalt gerade übertragen wird, z.B. "0" für die Anhänger-Achskonfiguration AKonf und "1" für die Radposition R.i. Das Steuergerät 4 kann dann anhand des Identifikationsbits erkennen, welche Information R.i und AKonf gerade übertragen wird. Soll die Anhänger-Bezeichnung B in einem dritten Datentelegramm S1 übertragen werden, werden zur Identifikation zwei Bits benötigt, um zwischen R.i, AKonf und B unterscheiden zu können.

Falls die Übertragung der Anhänger-Bezeichnung B deutlich mehr als die oben erwähnten 8 Bits benötigt, kann auch ein größerer Abschnitt innerhalb des Datentelegramms S1 für die Übertragung der Anhänger-Bezeichnung B zur Verfügung gestellt werden oder ein längeres Datentelegramm S1 als üblich generiert werden.

Das Steuergerät 4 verarbeitet die im Datentelegramm S1 übertragenen und vom Empfangsmodul 5 aufgenommenen Daten weiter. Das Steuergerät 4 und das Empfangsmodul 5 sowie ggf. das weitere Empfangsmodul im Steuergerät 4 bilden hierbei ein Überwachungssystem 100 zur Überwachung von Reifenzuständen p, T, s und kritischen Reifen-Sensor-Modul-Zuständen unter Verwendung der Reifen-Sensor-Module 6.i, 106.i, 206.i, wobei die Reifen-Sensormodule 6.i am eigenen Anhängerfahrzeug 3 bevorzugt auszuwerten sind, um eine Überwachung der Reifenzustände p, T, s und von kritischen Reifen-Sensor-Modul-Zuständen am eigenen Anhängerfahrzeug 3 zu ermöglichen und die zu verarbeitende Datenmenge einzuschränken.

Um ein eigenes Anhängerfahrzeug 3 anzulernen und dazu Reifen-Sensor-Module 6.i vom eigenen Anhänger-Fahrzeug 3 eindeutig zu erkennen, wird eine automatische Anhänger-Erkennung (ATL - automatic trailer learning) durchgeführt, die gemäß einer einfachen Ausführungsvariante lediglich dann durchgeführt wird, wenn sich das Nutzfahrzeug-Gespann 1 bewegt, d.h. beispielsweise die Zündung betätig ist und von den Reifen-Sensor-Modulen des Zugfahrzeuges 2 eine Bewegung gemeldet wird.

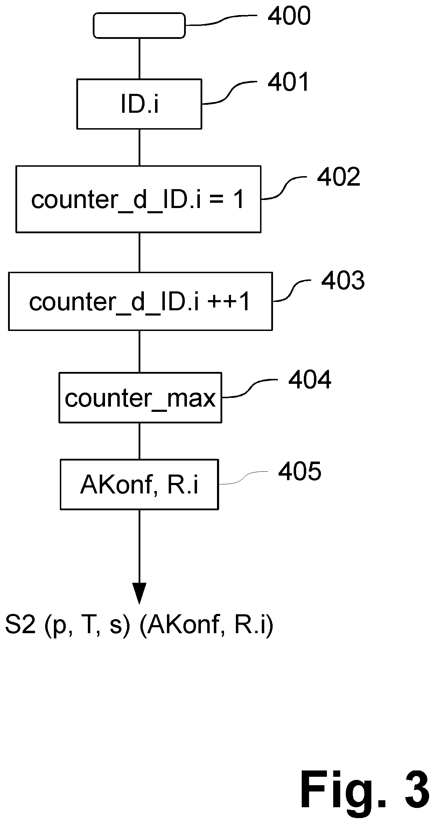

Dazu wird gemäß dem Flussdiagramm in Fig. 3 - nachdem in einem anfänglichen Schritt 400 eine Bewegung des Nutzfahrzeug-Gespanns 1 festgestellt wurde - in einem ersten Schritt 401 von jedem in einem Überwachungsbereich 8 des Empfangsmoduls 5 erkannten Reifen-Sensor-Modul 6.i, 106.i, 206.i die über das Datentelegramm S1 übertragene Sensor-Identifikation ID.i ermittelt und auf dem Steuergerät 4 zwischengespeichert, wobei lediglich sich bewegende Reifen-Sensor-Module 6.i, 106.i, 206.i berücksichtigt werden. Jeder neuen Sensor-Identifikation ID.i wird in einem zweiten Schritt 402 ein Fahrend-Zähler counter_d_ID.i zugeordnet und dieser auf eins gesetzt. In einem dritten Schritt 403 wird für jedes empfangene Datentelegramm S1 einer bestimmten Sensor-Identifikation ID.i der entsprechende Fahrend-Zähler counter_d_ID.i erhöht. Hat einer der Fahrend-Zähler counter_d_ID.i für ein bestimmtes Reifen-Sensor-Modul 6.i, 106.i, 206.i einen vorab festgelegten Maximal-Zähler counter max von beispielsweise dreißig empfangenen Datentelegrammen S1 mit dieser Sensor-Identifikation ID.i erreicht, wird in einem vierten Schritt St404 dieses Reifen-Sensor-Modul 6.i akzeptiert, und es findet eine Bewertung statt, in der für jedes weitere erfasste Reifen-Sensor-Modul 6.i, 106.i, 206.i geprüft wird, ob dieses mit hoher Wahrscheinlichkeit ebenfalls zum eigenen Anhänger-Fahrzeug 3 gehört. Ist dies der Fall, werden die entsprechenden Reifen-Sensor-Module 6.i ebenfalls akzeptiert, wobei unter Akzeptieren zu verstehen ist, dass diese dem eigenen Anhänger-Fahrzeug 3 zugeordnet werden.

Da dieser einfache Anhänger-Erkennungsvorgang während der Fahrt durchgeführt wird und mehrere Minuten dauert, wird angenommen, dass von nicht zum eigenen Anhängerfahrzeug 3 gehörenden Reifen-Sensor-Modulen 106.i, 206.i - wenn überhaupt - eine geringere Anzahl an Datentelegrammen S1 empfangen wird als dem festgelegten Maximal-Zähler counter_max, so dass die akzeptierten Reifen-Sensor-Module 6.i mit hoher Wahrscheinlichkeit als zum eigenen Anhängerfahrzeug 3 gehörend klassifiziert werden können. Es wird also im Folgenden davon ausgegangen, dass es sich bei den akzeptierten Reifen-Sensor-Modulen 6.i um die am eigenen Anhängerfahrzeug 3 handelt.

Gemäß dieser Ausführungsform der einfachen Anhänger-Erkennung werden nach dem Akzeptieren einzelner Reifen-Sensor-Module 6.i in einem abschließenden fünften Schritt 405 zusätzlich die von den akzeptierten Reifen-Sensor-Modulen 6.i übertragene Anhänger-Achskonfiguration AKonf sowie die Reifenpositionen R.i vom Steuergerät 4 ausgewertet und auf diesem für eine Positionszuordnung zwischengespeichert. D.h. nachdem die Reifen-Sensor-Module 6.i akzeptiert wurden, kann der jeweiligen Sensor-Identifikation ID.i auch die Radposition R.i innerhalb der jeweiligen Anhänger-Achskonfiguration AKonf zugeordnet werden. Wird also ein kritischer Reifenzustand p, T, s oder ein kritischer Reifen-Sensor-Modul-Zustand anhand der von den Datentelegrammen S1 übermittelten Daten erkannt, kann dies über ein Status-Signal S2 positionsbezogen ausgegeben und dem Fahrer beispielsweise auf einer Anzeige mitgeteilt werden. Aber auch ohne kritischen Reifenzustand oder Reifen-Sensor-Modul-Zustand kann eine Ausgabe des Status-Signals S2 erfolgen, um dem Fahrer beispielsweise den aktuellen Reifendruck p und/oder die aktuelle Reifentemperatur T anzuzeigen.

Während oder nach der oben beschriebenen einfachen Anhänger-Erkennung kann es zu Unstimmigkeiten in den von den dem eigenen Anhängerfahrzeug 3 zugeordneten Reifen-Sensor-Modulen 6.i empfangenen Informationen kommen. Beispielsweise kann eine Radposition R.i nicht zu der Anhänger-Achskonfiguration AKonf passen, eine Radposition R.i mehrfach belegt sein oder akzeptierte Reifen-Sensor-Module 6.i unterschiedliche Anhänger-Achskonfigurationen AKonf aufweisen. Dies kann beispielsweise dann auftreten, wenn Reifen ausgetauscht werden und infolge dessen vergessen wird, an einzelnen Reifen die Radpositionen R.i und/oder die Anhänger-Achskonfiguration AKonf neu zu speichern.

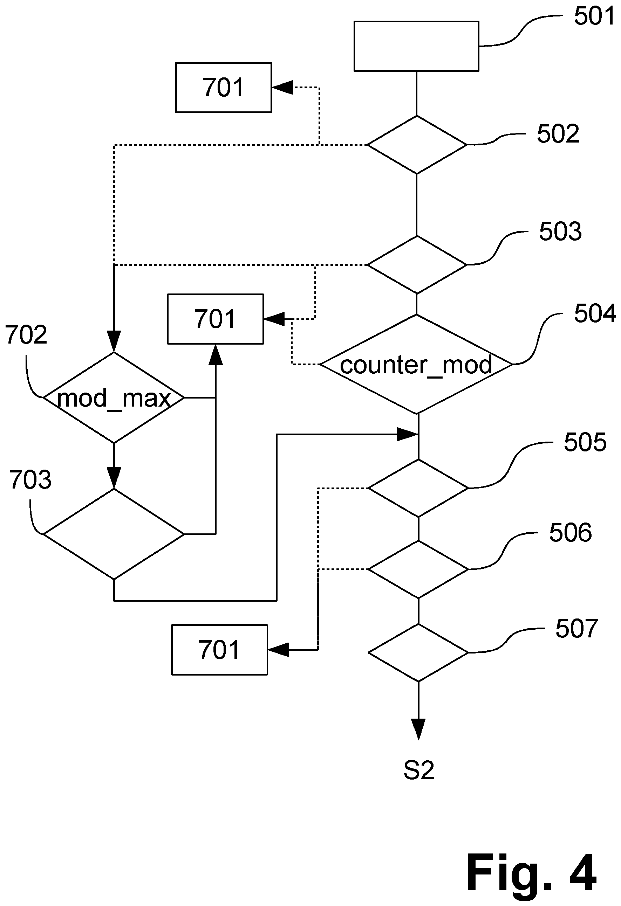

Um dies zu erkennen und entsprechend darauf zu reagieren, ist in Fig. 4 ein Flussdiagramm für eine Plausibilisierung der erkannten und akzeptierten Reifen-Sensor-Module 6.i des eigenen Anhängerfahrzeuges 3 dargestellt, die im Hintergrund nach dem Akzeptieren der einzelnen Reifen-Sensor-Module 6.i und/oder auch nach Abschluss der einfachen Anhänger-Erkennung durchgeführt werden kann.

Demnach wird das Verfahren in einem ersten Schritt 501 gestartet, beispielsweise nach Schritt 405 in Fig. 3, d.h. nachdem die einzelnen Reifen-Sensor-Module 6.i akzeptiert wurden und die einfache Anhänger-Erkennung eigentlich abgeschlossen werden kann. In einem zweiten Schritt 502 wird überprüft, ob von jedem während der einfachen Anhänger-Erkennung anhand der Sensor-Identifikation ID.i akzeptierten Reifen-Sensor-Modul 6.i über das Datentelegramm S1 eine Anhänger-Achskonfiguration AKonf übertragen wird. Ist dies der Fall, wird in einem dritten Schritt 503 geprüft, ob bei allen während der einfachen Anhänger-Erkennung anhand der Sensor-Identifikation ID.i akzeptierten Reifen-Sensor-Modulen 6.i dieselbe Anhänger-Achskonfiguration AKonf vorliegt. Ist dies der Fall, wird in einem vierten Schritt 504 eine Modul-Anzahl counter_mod ermittelt, d.h. eine Anzahl an während der einfachen Anhänger-Erkennung anhand der Sensor-Identifikation ID.i erkannten Reifen-Sensor-Modulen 6.i. Ist diese Modul-Anzahl counter_mod kleiner oder gleich der gemäß der Anhänger-Achskonfiguration AKonf zu erwartenden Anzahl an Reifen-Sensor-Modulen 6.i am eigenen Anhängerfahrzeug 3, findet in einem fünften Schritt 505 eine Auswertung der Radpositionen R.i statt. Dazu wird zunächst geprüft, ob jedes während der einfachen Anhänger-Erkennung anhand der Sensor-Identifikation ID.i akzeptierte Reifen-Sensor-Modul 6.i über das Datentelegramm S1 eine Radposition R.i übermittelt hat. Ist dies der Fall, wird in einem sechsten Schritt 506 überprüft, ob eine Radposition R.i mehrfach vergeben ist. Ist dies nicht der Fall, wird in einem siebenten Schritt 507 geprüft, ob alle Radpositionen R.i gemäß der übertragenen Anhänger-Achskonfiguration AKonf vorhanden sind, d.h. ob die Modul-Anzahl counter_mod mit der gemäß der Anhänger-Achskonfiguration AKonf zu erwartenden Anzahl an Reifen-Sensor-Modulen 6.i am eigenen Anhängerfahrzeug 3 übereinstimmt.

Ist dies der Fall, hat die einfache Anhänger-Erkennung wie gewünscht funktioniert und kann vollständig abgeschlossen werden, und über das Statussignal S2 kann für alle Reifen der Reifenzustand p, T, s bzw. der Reifen-Sensor-Modul-Zustand ausgegeben werden, um diesen positionsbezogen auf einer Anzeige für den Fahrer anzuzeigen, so dass diesem zu allen Reifen ein Zustand angezeigt werden kann.

Für den Fall, dass in einzelnen Schritten gemäß Fig. 4 gezwungenermaßen auf einen anderen Pfad - als den oben beschriebenen - ausgewichen wird, gibt es mehrere Möglichkeiten, die einfache Anhänger-Erkennung dennoch vollständig abzuschließen. Wird demnach im zweiten Schritt 502 erkannt, dass nicht von allen akzeptierten Reifen-Sensor-Modulen 6.i eine Anhänger-Achskonfiguration AKonf übertragen wird, wird in einem ersten Ausweichschritt 701 die Positionszuordnung der Reifen-Sensor-Module 6.i vollständig im Zwischenspeicher des Steuergerätes 4 gelöscht und bei gleichzeitigem Erkennen eines kritischen Reifenzustandes p, T, s oder Reifen-Sensor-Modul-Zustandes durch ein beliebiges bereits akzeptiertes Reifen-Sensor-Modul 6.i über das Statussignal S2 ausgegeben, dass an einem beliebigen Reifen des eigenen Anhängerfahrzeuges 3 ein kritischer Reifenzustand p, T, s oder ein kritischer Reifen-Sensor-Modul-Zustand vorliegt. D.h. es kann gemäß dieser Variante keine positionsbezogene Anzeige stattfinden. Der Fahrer muss somit selbst nachprüfen, um welchen Reifen es sich handelt. Ergänzend kann eine Fehlermeldung ausgegeben werden, dass aufgrund von Inkonsistenzen eine Positionszuordnung nicht möglich ist. Der erste Ausweichschritt 701 ist hierbei mehrfach im Flussdiagramm gezeigt, um die Übersichtlichkeit des Flussdiagramms zu erhalten.

Alternativ kann in einem zweiten Ausweichschritt 702 geprüft werden, ob mehr als eine maximale Modul-Anzahl mod_max, die beispielsweise die Hälfte der akzeptierten Reifen-Sensor-Module 6.i, d.h. counter_mod/2, angibt, dieselbe Anhänger-Achskonfiguration AKonf übertragen. Ist dies nicht der Fall, wird wieder zum ersten Ausweichschritt 701 übergegangen. Ist dies der Fall, wird die Anhänger-Achskonfiguration AKonf als verlässlich angenommen und in einem dritten Ausweichschritt 703 geprüft, ob die Modul-Anzahl counter_mod kleiner oder gleich der gemäß der Anhänger-Achskonfiguration AKonf zu erwartenden Anzahl an Reifen-Sensor-Modulen 6.i am eigenen Anhängerfahrzeug 3 ist. Ist dies der Fall, wird zum fünften Schritt 505 im Flussdiagramm übergegangen und ab dort weiterverfahren.

Für die Reifen-Sensor-Module 6.i, für die keine oder für die eine von der als verlässlich angenommenen Anhänger-Achskonfiguration AKonf abweichende Anhänger-Achskonfiguration AKonf übertragen wurde, wird dann die Positionszuordnung im Zwischenspeicher des Steuergerätes 4 gelöscht, da eine positionsgebundene Anzeige von Reifenzuständen und/oder Sensor-Modul-Zuständen für diese Reifen-Sensor-Module 6.i zu unsicher ist, da unklar ist, von welchem bzw. welchen Reifen-Sensor-Modulen 6.i der entsprechende Reifenzustand und/oder Sensor-Modul-Zustand übertragen wird. Weiterhin kann eine Fehlermeldung ausgegeben werden, dass aufgrund von Inkonsistenzen für diese Reifen-Sensor-Module 6.i eine Positionszuordnung nicht möglich ist.

Wird der dritte Ausweichschritt 703 nicht erfüllt, wird wieder zum ersten Ausweichschritt 701 übergegangen. Zusätzlich kann angezeigt werden, dass zu viele Reifen-Sensor-Module 6.i akzeptiert wurden.

Wird der zweite Schritt 502 erfüllt und wird im dritten Schritt 503 festgestellt, dass die Anhänger-Achskonfiguration AKonf nicht bei allen akzeptierten Reifen-Sensor-Modulen 6.i identisch ist, wird mit dem ersten Ausweichschritt 701 oder dem zweiten Ausweichschritt 702 wie o.g. fortgefahren.

Wird der dritte Schritt 503 erfüllt und der vierte Schritt 504 nicht, wird zum ersten Ausweichschritt 701 übergegangen. Zusätzlich kann angezeigt werden, dass zu viele Reifen-Sensor-Module 6.i akzeptiert wurden.

Wird im fünften Schritt 505 festgestellt, dass nicht alle akzeptierten Reifen-Sensor-Module 6.i eine Radposition R.i übertragen, wird zum ersten Ausweichschritt 701 übergegangen oder aber für die folgenden Schritte 506 und 507 lediglich diejenigen akzeptierten Reifen-Sensor-Module 6.i berücksichtigt und angezeigt, die eine Radposition R.i übertragen. Alle anderen akzeptierten Reifen-Sensor-Module 6.i werden im Steuergerät 4 als "nicht zugeordnet" eingestuft und die Plausibilisierung im sechsten Schritt 506 nur mit den zugeordneten Reifen-Sensor-Modulen 6.i weitergeführt.

Wurde im sechsten Schritt 506 eine Radposition R.i mehrfach erkannt, wird entweder zum ersten Übergangsschritt 701 übergegangen oder die dieser Radposition R.i zugeordneten Reifen-Sensor-Module 6.i für eine positionsgebundene Anzeige nicht berücksichtigt und deren Positionszuordnung im Zwischenspeicher des Steuergerätes 4 gelöscht. Weiterhin kann eine entsprechende Fehlermeldung für diese Reifen-Sensor-Module 6.i ausgegeben werden. Ergänzend kann eine positionsunbezogene Anzeige eines kritischen Reifenzustandes p, T, s oder eines kritischen Reifen-Sensor-Modul-Zustandes für diese mehrfach erkannten Radpositionen R.i ausgegeben werden. Für alle weiteren Reifen-Sensor-Module 6.i mit eindeutiger Radposition R.i findet dann eine positionsbezogene Anzeige der Reifenzustände und Reifen-Sensor-Modul-Zustände statt.

Wurde im siebenten Schritt 507 festgestellt, dass nicht für alle Radpositionen R.i Reifen-Sensor-Module 6.i gemäß der Anhänger-Achskonfiguration AKonf empfangen wurden, dann werden die Reifenzustände p, T, s oder die Reifen-Sensor-Modul-Zustände nur für die im Rahmen der einfachen Anhänger-Erkennung gefundenen Reifen-Sensor-Module 6.i angezeigt. Für die fehlenden Radpositionen wird entweder kein Inhalt angezeigt oder ein Hinweis gegeben, dass für diese Radpositionen keine Datentelegramme S1 empfangen wurden.

Somit sind mehrere Verzweigungen möglich, um auf eine Unstimmigkeit bzw. Inkonsistenzen bei der einfachen Anhänger-Erkennung zu reagieren, vorhanden. Wie reagiert wird, kann durch eine Abwägung der Vor- und Nachteile des entsprechenden Pfades für das verwendete Fahrzeug-Gespann 1 entschieden werden.

Sind die einfache Anhänger-Erkennung gemäß Fig. 3 und die Plausibilisierung gemäß Fig. 4 abgeschlossen, werden von den akzeptieren Reifen-Sensor-Modulen 6.i die Sensor-Identifikationen ID.i sowie zugehörigen Radpositionen R.i und die zugehörige Anhänger-Achskonfiguration AKonf im Steuergerät 4 fest gespeichert, so dass die Daten des zuletzt erkannten Anhängerfahrzeuges 3 im Steuergerät 4 vorliegen. Gab es bei der Plausibilisierung Inkonsistenzen werden je nach Strategie die Radposition R.i und/oder Anhänger-Achskonfiguration AKonf nicht oder nur teilweise abgespeichert.

Gemäß einer weiteren Ausführungsform ist vorgesehen, in einer erweiterten Anhänger-Erkennung zusätzlich die Anhänger-Bezeichnung B des Anhängerfahrzeuges 3, 103, 203 sowie die Anhänger-Achskonfiguration AKonf und die Radposition R.i auf dem Steuergerät 4 zwischenzuspeichern, wenn ein neues Reifen-Sensor-Modul 6.i, 106.i, 206.i im Überwachungsbereich 8 erkannt wurde. Dieses Zwischenspeichern kann im Gegensatz zu der in Fig. 3 beschriebenen Ausführungsform der einfachen Anhänger-Erkennung in dieser erweiterten Ausführungsform auch bereits im Stillstand erfolgen.

D.h. dem Reifen-Sensor-Modul 6.i, 106.i, 206.i bzw. der Sensor-Identifikation ID.i wird auf dem Steuergerät 4 zusätzlich noch die Anhänger-Bezeichnung B des zum entsprechenden Reifen-Sensor-Modul 6.i, 106.i, 206.i zugehörigen Anhängerfahrzeuges 3, 103, 203 sowie die Anhänger-Achskonfiguration AKonf und die Radposition R.i am jeweiligen Anhängerfahrzeug 3, 103, 203 zugeordnet und zwischengespeichert. Jedem neu erkannten Reifen-Sensor-Modul 6.i, 106.i, 206.i wird demnach bereits während des Hochzählens der Anzahl an erfassten Datentelegrammen S1, d.h. auch bereits bevor die Bewertung bei Erreichen des Maximal-Zählers counter max gestartet wird, neben der Sensor-Identifikation ID.i auch die Anhänger-Achskonfiguration AKonf, die Reifenposition R.i und die Anhänger-Bezeichnung B zugeordnet. Dadurch können die bei der erweiterten Anhänger-Erkennung aufgenommenen Daten gebündelt werden und eine Filterung von unwichtigen Daten bei der erweiterten Anhänger-Erkennung effizienter ausgeführt werden, da nach Erreichen des Maximal-Zählers counter_max, d.h. unmittelbar beim Start der Bewertung, bereits eine Zuordnung oder Nicht-Zuordnung erfolgen kann.

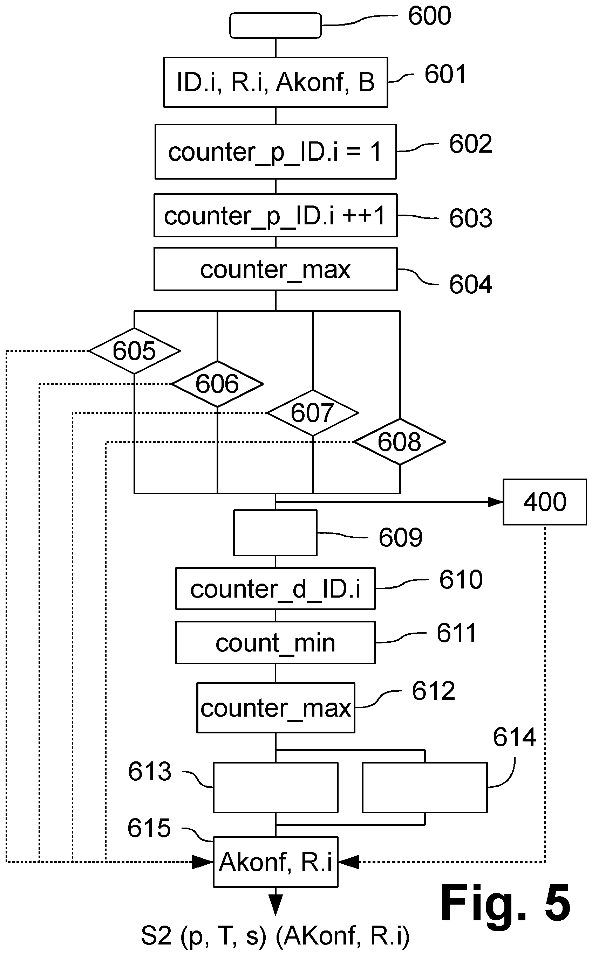

Demnach können gemäß Fig. 5 in einem anfänglichen Schritt 600 zu Beginn der erweiterten Anhänger-Erkennung erkannte Reifen-Sensor-Module 106.i, 206.i unberücksichtigt bleiben, die einen Bewegungszustand übertragen, der auf sich bewegende Räder hinweist, da die Erkennung bereits im Stillstand startet.

Für ein neu erkanntes, sich nicht bewegendes Reifen-Sensor-Modul 6.i, 106.i, 206.i mit der Sensor-Identifikation ID.i wird im Stillstand in einem ersten Schritt 601 die Sensor-Identifikation ID.i sowie die dazugehörigen Radpositionen R.i, Anhänger-Achskonfigurationen AKonf sowie die Anhänger-Bezeichnung B entsprechend ihrer Zuordnung auf dem Steuergerät 4 zwischengespeichert. In einem zweiten Schritt 602 wird ein Stillstand-Zähler counter_p_ID.i für jede neu empfangene ID.i eines sich nicht bewegenden Reifen-Sensor-Moduls 6.i, 106.i, 206.i auf eins gesetzt und in einem dritten Schritt 603 wird der Stillstand-Zähler counter_p_ID.i für jedes von diesem Reifen-Sensor-Modul 6.i, 106.i, 206.i im Stillstand empfangene Datensignal S1 um beispielweise eins nach oben gezählt.

Wird in einem vierten Schritt 604 für ein Reifen-Sensor-Module 6.i der Maximal-Zähler counter_max erreicht, startet wie auch in Fig. 3 eine Bewertung der bisher erfassten Reifen-Sensor-Module 6.i, 106.i, 206.i bereits im Stillstand. Die Zeit, nachdem eine derartige Bewertung stattfindet, wird über den Maximal-Zähler counter max festgelegt. Dieser Maximal-Zähler counter max kann für die erweiterte Anhänger-Erkennung beispielsweise auf zwischen zwei und zehn empfangene Datentelegramme S1 pro Sensor-Identifikation ID.i festgelegt werden.

Der Maximal-Zähler counter max kann bei der erweiterten Anhänger-Erkennung grundsätzlich niedriger gewählt werden, da die Sicherheit der Erkennung nicht nur über den Maximal-Zähler counter_max, sondern zusätzlich über die Anhänger-Bezeichnung B und die damit verbundene Bewertung erreicht wird. D.h. auch ein längeres Zählen von Datentelegrammen S1 pro Sensor-Identifikation ID.i liefert mit hoher Wahrscheinlichkeit kein anderes Ergebnis. Dadurch kann Zeit gespart werden.

Wurde nach Erreichen des Maximal-Zählers counter max festgestellt, dass zwei unterschiedlichen Sensor-Identifikationen ID.i dieselbe Anhänger-Bezeichnung B, dieselbe Anhänger-Achskonfiguration AKonf und auch dieselbe Radposition R.i zugeordnet wurde, wird mit einer entsprechenden Fehlermeldung reagiert und auf die einfache, oben beschriebene Anhänger-Erkennung gemäß Fig. 3 ohne Berücksichtigung der Anhänger-Bezeichnung B zurückgegriffen, die ausgeführt wird, sobald das Fahrzeug-Gespann 1 sich in Bewegung setzt. Bis dahin kann anhand der erkannten Reifen-Sensor-Module 6.i, 106.i, 206.i aber auch eine positionsunbezogene Anzeige der Reifenzustände oder Reifen-Sensor-Zustände im Rahmen einer Umfeldüberwachung erfolgen. Der Fahrer hat dann selbst nachzuschauen, welcher Reifen ggf. auch an benachbarten Anhängerfahrzeugen 103, 203 defekt ist.

Selbiges kann durchgeführt werden, falls Sensor-Identifikationen ID.i mit derselben Anhänger-Bezeichnung B aber unterschiedlichen Anhänger-Achskonfigurationen AKonf zugeordnet wurden. Insgesamt ist hier das Flussdiagramm gemäß Fig. 4 für Inkonsistenzen entsprechend anwendbar.

Die erweiterte Anhänger-Erkennung kann abgebrochen werden, wenn bei der Bewertung nach Erreichen des Maximal-Zählers counter max im Stillstand drei oder mehr Anhänger-Bezeichnungen B erfasst werden, da in diesem Fall anzunehmen ist, dass eine schnelle Anhänger-Erkennung sehr unwahrscheinlich ist. In diesem Fall wird auf die einfache Anhänger-Erkennung gemäß Fig. 3 zurückgegriffen. Um jedoch die erweiterte Anhänger-Erkennung nach Erreichen des Maximal-Zählers im Stillstand nicht unnötig abzubrechen, da beispielsweise im Stillstand auf einem Parkplatz eine Vielzahl an unterschiedlichen Anhänger-Bezeichnungen B zu erwarten sind, wird die erweiterte Anhänger-Erkennung in dem Fall vorzugsweise erst nach einer zusätzlichen Plausibilisierung nach Fahrtbeginn abgebrochen und auf die einfache Anhänger-Erkennung ausgewichen, wenn auch dann immer noch drei oder mehrere Anhänger-Bezeichnungen B erfasst werden.

Selbiges kann durchgeführt werden, für den Fall dass nur zwei unterschiedliche Anhänger-Bezeichnungen B erfasst wurden und gleichzeitig die Anzahl der erkannten Reifen-Sensor-Module 6.i für eine Anhänger-Bezeichnung, z.B. B = "A1", gleich der anhand der Anhänger-Achskonfiguration AKonf zu erwartenden Reifen-Sensor-Module 6.i ist und gleichzeitig für die zweite Anhänger-Bezeichnung, z.B. B = "A3" die Anzahl der erkannten Reifen-Sensor-Module 6.i gleich oder größer als ein Grenzprozentsatz per th von beispielsweise 40% der anhand der Anhänger-Achskonfiguration AKonf zu erwartenden Reifen-Sensor-Module 206.i ist.

Für eine möglichst schnelle Anhänger-Erkennung können anhand der Anhänger-Bezeichnung B in den folgenden Schritten mehrere Kriterien parallel oder nacheinander geprüft werden.

Demnach kann in einem fünften Schritt 605 bereits im Stillstand und nach Erreichen des Maximal-Zählers counter_max von beispielsweise zwei bewertet werden, ob lediglich eine Anhänger-Bezeichnung B vorhanden ist und die übertragene Anhänger-Achskonfiguration AKonf für alle Reifen-Sensor-Module 6.i identisch ist und die Radposition R.i auch zu dieser Anhänger-Achskonfiguration AKonf passt.

Die Sicherheit der Erkennung trotz niedrigem Maximal-Zähler counter_max wird hierbei dadurch gewährleistet, dass lediglich eine Anhänger-Bezeichnung B und lediglich eine Anhänger-Achskonfiguration AKonf vorliegen und die Anzahl der Sensor-Identifikationen ID.i genau der Radanzahl der Anhänger-Achskonfiguration AKonf entspricht und jede Radposition R.i nur einfach belegt ist. Somit ist unwahrscheinlich, dass die Wahl eines höheren Maximal-Zählers counter_max ein anderes Ergebnis liefert.

Um abzusichern, dass das einzig erkannte Anhängerfahrzeug 3 in diesem Fall auch tatsächlich angekoppelt ist und nicht beispielsweise auf dem Hof zum Beladen dauerhaft abgestellt wurde, kann nach Fahrtbeginn eine Plausibilisierung stattfinden, ob die Reifen-Sensor-Module 6.i mit der erkannten Anhänger-Bezeichnung B immer noch verfügbar sind, d.h. diese Reifen-Sensor-Module 6.i sich dann auch im Fahrtzustand befinden.

Desweiteren wird in einem sechsten Schritt 606 geprüft, ob die zuletzt auf dem Steuergerät 4 gespeicherten Sensor-Identifikationen ID.i, d.h. dem zuletzt angehängten Anhängerfahrzeug 3 zugeordnete Reifen-Sensor-Module 6.i, weiterhin erkannt werden. Dazu wird geprüft, ob lediglich Datentelegramme S1 empfangen werden, die die gespeicherte Sensor-Identifikation ID.i übertragen. Weiterhin wird geprüft, ob von Reifen-Sensor-Modulen 6.i von allen gespeicherten Radpositionen R.i Sensor-Identifikationen ID.i empfangen wurden. Liegen sonst keine Unstimmigkeiten in den empfangenen und gespeicherten Achskonfigurationen AKonf, Radpositionen R.i sowie Anhänger-Bezeichnung B vor, werden alle Reifen-Sensor-Module 6.i akzeptiert und das Anhängerfahrzeug 3 bleibt erkannt. Somit unterscheidet sich der sechste Schritt 606 vom fünften Schritt 605 lediglich dadurch, dass zusätzlich die auf dem Steuergerät 4 gespeicherten Informationen hinzugezogen werden. Um auch hier wieder zu plausibilisieren, dass das Anhängerfahrzeug 3 angehängt ist, kann nach Fahrtantritt geprüft werden, ob weiterhin von den entsprechenden Reifen-Sensor-Modulen 6.i Datentelegramme S1 empfangen werden, d.h. diese Reifen-Sensor-Module 6.i sich dann auch im Fahrtzustand befinden.

In einem siebenten Schritt 607 kann weiterhin geprüft werden, ob bis dahin lediglich eine Anhänger-Bezeichnung B zwischengespeichert wurde und die Anzahl der zwischengespeicherten Sensor-Identifikationen ID.i, d.h. der erkannten Reifen-Sensor-Module 6.i, größer als die Hälfte der anhand der Anhänger-Achskonfiguration AKonf zu erwartenden Reifen-Sensor-Module 6.i ist. Für das eigene Anhängerfahrzeug 3 gemäß Fig. 1 ist dies der Fall, wenn mindestens drei der vier Reifen-Sensor-Module 6.i erkannt wurden. Dann ist die erweiterte Anhänger-Erkennung abgeschlossen und das eigene Anhängerfahrzeug 3 angelernt, und es kann eine entsprechende Ausgabe der Statussignale S2 und eine positionsgebundene Anzeige erfolgen.

Eine Anzeige von Reifenzuständen und Reifen-Sensor-Modul-Zuständen erfolgt dann zunächst lediglich anhand der erkannten Reifen-Sensor-Module 6.i. Im Hintergrund werden weiter Reifen-Sensor-Module erfasst, und falls diese zum eigenen Anhängerfahrzeug 3 passen, d.h. die Anhänger-Bezeichnung B, die Anhänger-Achskonfiguration AKonf und die Reifenpositionen R.i stimmig sind und keine sonstigen Inkonsistenzen auftreten, erfolgt auch für diese Reifen-Sensor-Module 6.i eine Anzeige von Reifenzuständen und Reifen-Sensor-Modul-Zuständen.

Weiterhin kann in einem achten Schritt 608 geprüft werden, ob bei zwei unterschiedlichen Anhänger-Bezeichnungen B die Anzahl der erkannten Reifen-Sensor-Module 6.i für eine Anhänger-Bezeichnung, z.B. B = "A1", gleich der anhand der Anhänger-Achskonfiguration AKonf zu erwartenden Reifen-Sensor-Module 6.i ist und gleichzeitig für die zweite Anhänger-Bezeichnung, z.B. B = "A3" die Anzahl der erkannten Reifen-Sensor-Module 6.i geringer als ein Grenzprozentsatz per_th von beispielsweise 40% der anhand der Anhänger-Achskonfiguration AKonf zu erwartenden Reifen-Sensor-Module 206.i ist. Dies entspricht der Situation in Fig. 1, wenn alle eigenen Reifen-Sensor-Module 6.i erkannt sind und vom rechten Anhängerfahrzeug 203 lediglich ein Reifen-Sensor-Modul 206.3 im Überwachungsbereich 8 liegt. In dem Fall ist das eigene Anhängerfahrzeug 3 angelernt, und es kann eine entsprechende Ausgabe der Statussignale S2 und eine positionsgebundene Anzeige erfolgen.

In diesem Fall werden die Reifen-Sensor-Module 6.i, denen die eine Anhänger-Bezeichnung B = "A1" zugeordnet ist, dem eigenen Anhängerfahrzeug 3 zugeordnet und die Reifen-Sensor-Module 206.i mit der anderen Anhänger-Bezeichnung B = "A3" im Zwischenspeicher gelöscht. Somit kann eine Anzeige von allen Reifen-Sensor-Modulen 6.i des eigenen Anhängerfahrzeuges 3 stattfinden.

Somit kann bei Erfüllen der genannten Kriterien in den Schritten 605 bis 608 in einigen Ausnahmefällen die erweiterte Anhänger-Erkennung vorzeitig abgeschlossen werden und eine Anzeige der entsprechenden Informationen an den Fahrer früher erfolgen, indem die folgenden Schritte 609 bis 614 gemäß einer optionalen Ausführung übergangen werden. Die gestrichelten Abzweigungen in Fig. 5 stellen somit lediglich einen optionalen Ausweg dar. Die einzelnen Überprüfungen in den Schritten 605 bis 608 können hierbei in variabler Reihenfolge erfolgen. Dies kann beispielsweise dadurch erreicht werden, dass unterschiedliche Maximal-Zähler counter_max für die einzelnen Schritte 605 bis 608 angenommen werden und dementsprechend der vierte Schritt 604 für unterschiedliche Überprüfungen früher oder später erreicht wird. So kann jeder Überprüfung genügend Zeit gegeben werden, um ein sicheres Ergebnis für eine schnelle Anhänger-Erkennung zu liefern.

Ist eine Plausibilisierung der im Stillstand erzielten Ergebnisse nach Fahrtbeginn gewünscht oder konnten die Überprüfungen im Stillstand nicht positiv abgeschlossen werden, weil z.B. zu einer der Anhänger-Bezeichnungen B, z.B. B = "A2", d.h. für das linke Anhängerfahrzeug 103 in Fig. 1, gleichviel oder mehr als der Grenzprozentsatz per_th von 40% der zugelassenen Reifen-Sensor-Module 106.i erkannt wurden, weil mehr als zwei Anhänger-Bezeichnungen B vorhanden sind oder weil der Maximal-Zähler counter max im Stillstand nicht erreicht wurde, findet erst im anschließenden Fahrzustand eine abschließende Bewertung statt. Eine abschließende Bewertung während der Fahrt kann aber auch dann vorgesehen sein, wenn gemäß einer optionalen Ausführung die positiv abgeschlossenen Überprüfungen in den Schritten 605 bis 608 plausibilisiert werden sollen, d.h. der optionale Ausweg über die gestrichelten Linien in Fig. 5 wird nicht gewählt.

Konnte demnach im Stillstand kein Anhängerfahrzeug 3, 103, 203 als zum eigenen Fahrzeug-Gespann 1 gehörend erkannt werden, soll eine Plausibilisierung der im Stillstand erzielten Ergebnisse stattfinden oder wurde der entsprechende Maximal-Zähler counter max für kein erfasstes Reifen-Sensor-Modul 6.i, 106.i, 206.i erreicht, d.h. es wurde noch keine Bewertung gestartet, werden sobald sich das Fahrzeug-Gespann 1 beginnt zu bewegen, in einem neunten Schritt 609 nur noch Reifen-Sensor-Module 6.i, 106.i, 206.i berücksichtigt, die sich ebenfalls bewegen. Parallel dazu beginnt die oben in Fig. 3 beschriebene einfache Anhänger-Erkennung ab dem Schritt 400 lediglich in Abhängigkeit der Radposition R.i sowie der Anhänger-Achskonfiguration AKonf und ohne Berücksichtigung der Anhänger-Bezeichnung B.

Für alle empfangenen Datentelegramme S1 einer bestimmten Sensor-Identifikation ID.i wird in einem zehnten Schritt 610 nun der Fahrend-Zähler counter_d_ID.i beginnend mit eins hochgezählt und weiterhin die Anhänger-Bezeichnung B, die Radposition R.i sowie die Anhänger-Achskonfiguration AKonf auf dem Steuergerät 4 zwischengespeichert.

Eine Bewertung findet im Fahrzustand nun beispielsweise folgendermaßen statt: Nachdem der Fahrend-Zähler counter_d_ID.i in einem elften Schritt 611 für zumindest eine Sensor-Identifikation ID eine Mindest-Anzahl count_min von beispielsweise zwei erreicht hat, werden alle zwischengespeicherten Daten zu Reifen-Sensor-Modulen 6.i, 106.i, 206.i, dessen Anhänger-Bezeichnung B im fahrenden Zustand nicht mehr erkannt werden, im Zwischenspeicher des Steuergerätes 4 gelöscht. Danach werden alle sich noch im Zwischenspeicher befindlichen Stillstand-Zähler counter_p_ID.i auf den Fahrend-Zähler counter_d_ID.i, der dieselbe Sensor-Identifikation ID.i aufweist und der ggf. auch null sein kann, falls von diesen Reifen-Sensor-Modulen 6.i, 106.i, 206.i während der Fahrt noch keine Datentelegramme S1empfangen wurden, aufaddiert. Ab diesem Zeitpunkt werden nur noch die Fahrend-Zähler counter_d_ID.i verwendet und bewertet. Dadurch kann die Geschwindigkeit der erweiterten Anhänger-Erkennung erhöht werden, da beim Zählen nicht bei eins begonnen wird und somit auch für das eigene Anhänger-Fahrzeug 3, das dann doppelt gezählt werden würde, nicht von vorn begonnen wird.

In einem zwölften Schritt 612 wird dann geprüft, ob nach Erreichen der Mindest-Anzahl count_min und nach dem Aufaddieren des Stillstand-Zählers counter_p_ID.i auf den Fahrend-Zähler counter_d_ID.i der Maximal-Zähler counter_max erreicht ist. In diesem Fall findet in einem dreizehnten Schritt 613 eine Bewertung der zwischengespeicherten Daten, d.h. der Anhänger-Bezeichnung B, der Radpositionen R.i und der Anhänger-Achskonfiguration AKonf, statt. Aufgrund der Abfrage der Mindest-Anzahl count min wird gewährleistet, dass auch nach Fahrtbeginn noch Datentelegramme S1 erfasst werden und mit in die Bewertung einbezogen werden können. D.h. es findet nicht sofort nach Fahrtbeginn eine Bewertung statt, weil beispielsweise der Maximal-Zähler counter_max bereits im Stillstand erreicht ist, sondern erst nach dem Empfangen weiterer Datentelegramme S1 während der Fahrt.

Dadurch kann auch der Fall ausgeschlossen werden, dass im Stillstand zu zwei oder mehreren unterschiedlichen Anhänger-Bezeichnungen B jeweils konsistente Daten über das Datentelegramm S1 ermittelt werden konnten und die Anhängerfahrzeuge 3, 103, 203 gleichzeitig losgefahren sind. Dann kann über einen längeren Zeitraum erkannt werden, ob sich die benachbarten Anhängerfahrzeuge 103, 203 tatsächlich voneinander entfernen und dadurch das eigene Anhängerfahrzeug 3 erkannt werden.

Die Bewertung während der Fahrt entspricht hierbei im Wesentlichen den Schritten 604 bis 608 mit dem Unterschied, dass die Bewertung nun lediglich auf sich bewegende Reifen-Sensor-Module 6.i, 106.i, 206.i eingeschränkt ist. Je nach Ergebnis der Bewertung werden die entsprechenden Reifen-Sensor-Module 6.i akzeptiert und die erweiterte Anhänger-Erkennung ist abgeschlossen, so dass eine entsprechende Ausgabe des Status-Signals S2 mit Anzeige an den Fahrer erfolgen kann. Dadurch kann ein möglicherweise in den Schritten 604 bis 608 bereits ermitteltes Ergebnis bestätigt oder aber widerlegt werden, und entsprechend ein Abschluss oder ein Abbruch der erweiterten Anhänger-Erkennung erfolgen.

Alternativ kann während dieser Zeit auch eine positionsungebundene Ausgabe des Statussignals S2 erfolgen. D.h. bei Erkennen von kritischen Zuständen über eines der Datentelegramme S1 wird angezeigt, dass an irgendeinem der Räder, ggf. auch am Nachbarfahrzeug, ein Defekt vorliegt. Welches Rad betroffen ist, muss der Fahrer dann selbst erkennen.

Ergänzend kann in einem vierzehnten Schritt 614 während der Fahrt geprüft werden, ob bei Erreichen des Maximal-Zählers counter_max von beispielsweise dreißig für ein bestimmtes Reifen-Sensor-Modul 6.i mit einer bestimmten Anhänger-Bezeichnung B die Anzahl der bis dahin erkannten Reifen-Sensor-Module 6.i mit derselben Anhänger-Bezeichnung B zur Anhänger-Achskonfiguration AKonf passt. Ist dies der Fall, werden lediglich die Reifen-Sensor-Module 6.i mit dieser Anhänger-Bezeichnung B in Abhängigkeit der Anhänger-Achskonfiguration AKonf an den Fahrer dargestellt. Die Reifen-Sensor-Module 106.i 206.i mit anderen Anhänger-Bezeichnungen B bleiben unberücksichtigt, wobei davon ausgegangen wird, dass aufgrund des hohen Maximal-Zählers counter_max und dem Fahrzustand diese Reifen-Sensor-Module 6.i mit hoher Sicherheit zum eigenen Anhängerfahrzeug 3 gehören. Ergänzend kann für die weiteren Reifen-Sensor-Module 6.i, die dieselbe Anhänger-Bezeichnung B aufweisen, zusätzlich gefordert werden, dass auch für diese Reifen-Sensor-Module 6.i genügend Datentelegrammen S1 zu empfangen sind, bevor auch diese tatsächlich akzeptiert werden.

Falls die Anzahl an bis dahin insgesamt erkannten Reifen-Sensor-Modulen 6.i mit derselben Anhänger-Bezeichnung B noch nicht mit der Anzahl der aufgrund der Anhänger-Achskonfiguration AKonf für dieses Reifen-Sensor-Modul 6.i zu erwartenden Anzahl an Reifen-Sensor-Module 6.i übereinstimmt, kann die erweiterte Anhänger-Erkennung dennoch abgeschlossen werden. Die noch fehlenden Reifen-Sensor-Module 6.i werden erst dann akzeptiert, wenn Datentelegramme S1 von diesen Reifen-Sensor-Modulen 6.i im weiteren Fahrtverlauf empfangen werden. Bis dahin kann bereits das gesamte Anhängerfahrzeug 3 mit seiner Anhänger-Achskonfiguration AKonf dargestellt werden und die Daten der fehlenden Reifen-Sensor-Module 6.i werden so lange nicht dargestellt, bis diese empfangen werden.

Liefert die erweiterte Anhänger-Erkennung auch während der Fahrt kein Ergebnis, wird auf die einfache Anhänger-Erkennung gemäß Fig. 3 ausgewichen und demnach gewartet, bis ohne Berücksichtigung der Anhänger-Bezeichnung B Reifen-Sensor-Module 6.i ggf. positionsgebunden erkannt werden.

Andernfalls wird nach dem Akzeptieren einzelner Reifen-Sensor-Module 6.i in einem abschließenden fünfzehnten Schritt 615 die von den akzeptierten Reifen-Sensor-Modulen 6.i übertragene Anhänger-Achskonfiguration AKonf und die Reifenpositionen R.i vom Steuergerät 4 bei der Auswertung und der Anzeige von Reifenzuständen p, T, s und/oder Reifen-Sensor-Modul-Zuständen berücksichtigt.

### Bezugszeichenliste

- 1: Nutzfahrzeug-Gespann
- 2: eigenes Zugfahrzeug
- 3: eigenes Anhängerfahrzeug
- 4: Steuergerät
- 5: Empfangsmodul
- 6.i: Reifen-Sensor-Module am eigenen Anhängerfahrzeug 3
- 7: Koordinatensystem
- 8: Überwachungsbereich
- 100: Überwachungssystem
- 102, 202: benachbarte Zugfahrzeuge
- 103, 203: benachbarte Anhängerfahrzeuge
- 106.i, 206.i: Reifen-Sensor-Module an benachbarten Anhängerfahrzeugen 103, 203
- 400 bis 405: Schritte der einfachen Anhänger-Erkennung
- 501 bis 507: Schritte der Plausibilisierung
- 600 bis 615: Schritte der erweiterten Anhänger-Erkennung
- 701, 702, 703: Ausweichschritte der Plausiblisierung

- AKonf: Anhänger-Achskonfiguration
- B: Anhänger-Bezeichnung
- count min: Mindest-Anzahl
- counter_d_ID.i: Fahrend-Zähler
- counter_p_ID.i: Stillstand-Zähler
- counter_max: Maximal-Zähler
- counter_mod: Modul-Anzahl
- ID.i: Sensor-Identifikation
- K1, K2: Koordinaten
- mod_max: maximale Modul-Anzahl
- p: Reifendruck
- per_th: Grenzprozentsatz
- R.i: Radposition
- s: mechanische Spannungen
- S1: Datentelegramm
- S2: Statussignal
- T: Reifentemperatur
- i: Indizes

## Patentansprüche

1. Verfahren zum Zuordnen von Reifen-Sensor-Modulen (6.i) zu einem Anhängerfahrzeug (3) eines eigenen Nutzfahrzeug-Gespanns (1), mit mindestens den folgenden Schritten:
- Erfassen von Datentelegrammen (S1) von Reifen-Sensor-Modulen (6.i, 106.i, 206.i) in einem Überwachungsbereich (8) eines Empfangsmoduls (5) (401; 600);
- Zuordnen der erfassten Datentelegramme (S1) zu einem Reifen-Sensor-Modul (6.i, 106.i, 206.i) (401; 601);
- Ermitteln einer Anzahl (counter_p_ID.i, counter_d_ID.i) an erfassten Datentelegrammen (S1) für jedes erkannte Reifen-Sensor-Modul (6.i, 106.i, 206.i) (403; 603, 610);
- Bewerten der erfassten Datentelegramme (S1), wenn die Anzahl (counter_p_ID.i, counter_d_ID.i) an erfassten Datentelegrammen (S1) für zumindest ein Reifen-Sensor-Modul (6.i, 106.i, 206.i) einen Maximal-Zähler (counter max) erreicht hat, zum Feststellen, ob die bis dahin insgesamt empfangenen Reifen-Sensor-Module (6.i, 106.i, 206.i) zum eigenen Anhängerfahrzeug (3) oder zum benachbarten Anhängerfahrzeug (103, 203) gehören (404; 604; 613);
- Akzeptieren der Reifen-Sensor-Module (6.i), die in der Bewertung als zum eigenen Anhängerfahrzeug (3) zugehörig erkannt wurden (404; 615),
**dadurch gekennzeichnet, dass**
von jedem Reifen-Sensor-Modul (6.i, 106.i, 206.i) eine dem jeweiligen Reifen-Sensor-Modul (6.i, 106.i, 206.i) zugeordnete Radposition (R.i) und eine Anhänger-Achskonfiguration (AKonf) erfasst werden, so dass für ein akzeptiertes Reifen-Sensor-Modul (6.i) in Abhängigkeit der erfassten Radposition (R.i) und der erfassten Anhänger-Achskonfiguration (AKonf) eine Positionszuordnung am eigenen Anhängerfahrzeug (3) erfolgen kann (405; 615) zum Ermöglichen einer positionsgebundenen Ausgabe von Reifenzuständen (p, T, s) und/oder Reifen-Sensor-Modul-Zuständen des eigenen Anhängerfahrzeuges (3).

2. Verfahren nach Anspruch 1, **dadurch gekennzeichnet, dass** die Anhänger-Achskonfiguration (AKonf) und/oder die Radposition (R.i) codiert über das Datentelegramm (S1) von jeweiligen Reifen-Sensor-Module (6.i, 106.i, 206.i) übertragen werden, wobei dazu jeder möglichen Anhänger-Achskonfiguration (AKonf) für Anhängerfahrzeuge (3, 103, 203) jeweils ein Wert zugewiesen wird und jeder möglichen Radposition(R.i) innerhalb der entsprechenden Anhänger-Achskonfiguration (AKonf) ebenfalls jeweils ein Wert zugewiesen wird, wobei der Wert für die Anhänger-Achskonfiguration (AKonf) und der Wert für die Radposition (R.i) auf dem entsprechenden Reifen-Sensor-Modul (6.i, 106.i, 206.i) gespeichert werden und über das Datentelegramm (S1) übertragen werden.

3. Verfahren nach Anspruch 2, **dadurch gekennzeichnet, dass** der Wert für die Radposition (R.i) einem Koordinatenpaar (K1, K2) in einem Koordinatensystem (7) entspricht.

4. Verfahren nach einem der vorhergehenden Ansprüche, **dadurch gekennzeichnet, dass** die über das Datentelegramm (S1) übertragene Radposition (R.i) und die Anhänger-Achskonfiguration (AKonf) je nach Datenumfang auf mehrere Datentelegramme (S1) verteilt werden.

5. Verfahren nach einem der vorhergehenden Ansprüche, **dadurch gekennzeichnet, dass** die akzeptierten Reifen-Sensor-Module (6.i) plausibilisiert werden, wobei dazu geprüft wird, ob
- jedes dem eigenen Anhängerfahrzeug (3) zugeordnete Reifen-Sensor-Modul (6.i) über das Datentelegramm (S1) auch tatsächlich eine Anhänger-Achskonfiguration (AKonf) überträgt (502), und/oder
- jedes dem eigenen Anhängerfahrzeug (3) zugeordnete Reifen-Sensor-Modul (6.i) dieselbe Anhänger-Achskonfiguration (AKonf) überträgt (503), und/oder
- eine Modul-Anzahl (counter mod) von dem eigenen Anhängerfahrzeug (3) zugeordneten Reifen-Sensor-Modulen (6.i) kleiner oder gleich der gemäß der Anhänger-Achskonfiguration (AKonf) zu erwartenden Anzahl von Reifen-Sensor-Modulen (6.i) ist (504), und/oder
- jedes dem eigenen Anhängerfahrzeug (3) zugeordnete Reifen-Sensor-Modul (6.i) über das Datentelegramm (S1) auch tatsächlich eine Radposition (R.i) überträgt (505), und/oder
- jedes dem eigenen Anhängerfahrzeug (3) zugeordnete Reifen-Sensor-Modul (6.i) eine unterschiedliche Radposition (R.i) überträgt (506), und/oder
- alle Radpositionen (R.i), die gemäß der Anhänger-Achskonfiguration (AKonf) zu erwarten sind, von den Reifen-Sensor-Modulen (6.i) übertragen werden (507).

6. Verfahren nach Anspruch 5, **dadurch gekennzeichnet, dass** für den Fall, dass einzelne dem eigenen Anhängerfahrzeug (3) zugeordnete Reifen-Sensor-Module (6.i) keine Anhänger-Achskonfiguration (AKonf) und/oder unterschiedliche Anhänger-Achskonfigurationen (AKonf) über das Datentelegramm (S1) übertragen,
- eine Anhänger-Achskonfiguration (AKonf) als verlässlich angenommen und für das eigene Anhängerfahrzeug (3) übernommen wird, wenn zumindest eine maximale Modul-Anzahl (mod_max) an Reifen-Sensor-Modulen (6.i) dieselbe Anhänger-Achskonfiguration (AKonf) überträgt, wobei die maximale Modul-Anzahl (mod_max) einem Anteil der Modul-Anzahl (counter mod), beispielsweise der Hälfte der Modul-Anzahl (counter mod), entspricht (702), und
- die Positionszuordnung aller Reifen-Sensor-Module (6.i) gelöscht und ggf. eine Fehlermeldung ausgegeben wird (701), wenn weniger als die maximale Modul-Anzahl (mod_max) an Reifen-Sensor-Modulen (6.i) dieselbe Anhänger-Achskonfiguration (AKonf) überträgt.

7. Verfahren nach Anspruch 5 oder 6, **dadurch gekennzeichnet, dass** für den Fall, dass einzelne dem eigenen Anhängerfahrzeug (3) zugeordnete Reifen-Sensor-Module (6.i) keine Radposition (R.i) über das Datentelegramm (S1) übertragen und/oder nicht für alle Radpositionen (R.i), die gemäß der Anhänger-Achskonfiguration (AKonf) zu erwarten sind, Reifen-Sensor-Module (6.i) empfangen werden, und/oder eine Radposition (R.i) von mehr als einem Reifen-Sensor-Modul (6.i) übertragen wird,
- lediglich den Reifen-Sensor-Modulen (6.i) eine Position zugeordnet wird, die eine Radposition (R.i) übertragen und deren Radposition (R.i) nicht auch von anderen Reifen-Sensor-Modulen (6.i) übertragen wird.

8. Verfahren nach Anspruch 5 oder 6, **dadurch gekennzeichnet, dass** für den Fall, dass
- die Modul-Anzahl (counter mod) größer als die gemäß der Anhänger-Achskonfiguration (AKonf) zu erwartenden Anzahl von Reifen-Sensor-Modulen (6.i) ist, und/oder
- mindestens ein dem eigenen Anhängerfahrzeug (3) zugeordnetes Reifen-Sensor-Modul (6.i) keine Radposition (R.i) über das Datentelegramm (S1) überträgt, und/oder
- eine Radposition (R.i) von mehr als einem Reifen-Sensor-Modul (6.i) übertragen wird, und/oder
- mindestens ein dem eigenen Anhängerfahrzeug (3) zugeordnetes Reifen-Sensor-Modul (6.i) keine Anhänger-Achskonfiguration (AKonf) überträgt, und/oder
- mindestens zwei dem eigenen Anhängerfahrzeug (3) zugeordnete Reifen-Sensor-Module (6.i) unterschiedliche Anhänger-Achskonfigurationen (AKonf) über das Datentelegramm (S1) übertragen,
die Positionszuordnung aller Reifen-Sensor-Module (6.i) gelöscht und ggf. eine Fehlermeldung ausgegeben wird (701).

9. Verfahren nach einem der vorhergehenden Ansprüche, **dadurch gekennzeichnet, dass** nach dem Zuordnen der Reifen-Sensor-Module (6.i) zum eigenen Anhängerfahrzeug (3) ein Überwachen von Reifenzuständen (p, T, s) und/oder von Reifen-Sensor-Modul-Zuständen erfolgt, wobei dazu die Datentelegramme (S1) von den dem eigenen Anhängerfahrzeug (3) zugeordneten Reifen-Sensor-Modulen (6.i) ausgewertet und die jeweiligen Reifenzustände (p, T, s) und/oder die Reifen-Sensor-Modul-Zustände über ein Statussignal (S2) ausgegeben und die Reifenzustände (p, T, s) und/oder die Reifen-Sensor-Modul-Zustände dem Fahrer angezeigt werden, wobei eine positionsgebundene Ausgabe und Anzeige für die Reifen-Sensor-Module (6.i) erfolgt, für die eine Positionszuordnung ermittelt, insbesondere gespeichert wurde, und für alle anderen Reifen-Sensor-Module (6.i) eine positionsunabhängige Ausgabe und Anzeige erfolgt.

10. Verfahren nach einem der vorhergehenden Ansprüche, **dadurch gekennzeichnet, dass** zum Bewerten der Datentelegramme (S1) nach Erreichen des Maximal-Zählers (counter max) für zumindest ein Reifen-Sensor-Modul (6.i, 106.i, 206.i) die Anhänger-Achskonfiguration (AKonf) und die Reifenposition (R.i) sowie zusätzlich eine über das Datentelegramm (S1) übertragene Anhänger-Bezeichnung (B) berücksichtigt werden zum Durchführen einer erweiterten Anhänger-Erkennung (604, 612), wobei dem jeweiligen Reifen-Sensor-Modul (6.i, 106.i, 206.i), von dem Datentelegramme (S1) empfangen werden, dazu bereits während des Ermitteln einer Anzahl (counter_p_ID.i, counter_d_ID.i) an erfassten Datentelegrammen (S1) zusätzlich die Anhänger-Bezeichnung (B), die Anhänger-Achskonfiguration (AKonf) und die Reifenposition (R.i) zugeordnet wird (601).

11. Verfahren nach Anspruch 10, **dadurch gekennzeichnet, dass** in der Bewertung nach Erreichen des Maximal-Zählers (counter_max) alle bisher erfassten Reifen-Sensor-Module (6.i) dem eigenen Anhängerfahrzeug (3) zugeordnet werden, wenn der Maximal-Zähler (counter max) für zumindest ein Reifen-Sensor-Modul (6.i) erreicht wird und wenn lediglich Datentelegramme (S1) von Reifen-Sensor-Modulen (6.i) erfasst wurden, die dieselbe Anhänger-Bezeichnung (B), dieselbe Anhänger-Achskonfiguration (AKonf) sowie von zumindest einer maximalen Modul-Anzahl (mod_max) unterschiedlicher Reifen-Sensor-Module (6.i) Datentelegramme (S1) mit unterschiedlichen Radpositionen (R.i) übertragen werden (607),
wobei für alle bisher erfassten Reifen-Sensor-Module (6.i) eine sofortige Positionszuordnung erfolgt und für alle nachträglich erfassten, noch fehlenden Reifen-Sensor-Module (6.i) gemäß der übermittelten Anhänger-Achskonfiguration (AKonf) mit der entsprechenden Anhänger-Bezeichnung (B) eine Positionszuordnung nachträglich erfolgt.

12. Verfahren nach Anspruch 11, **dadurch gekennzeichnet, dass** die maximale Modul-Anzahl (mod_max) einem beliebigen Wert zwischen null und der aufgrund der Anhänger-Achskonfiguration (AKonf) zu erwartenden Anzahl an Reifen-Sensor-Modulen (6.i), vorzugsweise der Hälfte, entspricht.

13. Verfahren nach Anspruch 11, **dadurch gekennzeichnet, dass** in der Bewertung nach Erreichen des Maximal-Zählers (counter_max) alle bisher erfassten Reifen-Sensor-Module (6.i) dem eigenen Anhängerfahrzeug (3) zugeordnet werden, wenn bis zum Erreichen des Maximal-Zählers (counter max) lediglich Datentelegramme (S1) von Reifen-Sensor-Modulen (6.i) erfasst wurden, die dieselbe Anhänger-Bezeichnung (B), dieselbe Anhänger-Achskonfiguration (AKonf) sowie alle zur Anhänger-Konfiguration (AKonf) passenden Radpositionen (R.i) zumindest einmalig übertragen (605).

14. Verfahren nach Anspruch 13, **dadurch gekennzeichnet, dass** in der Bewertung nach Erreichen des Maximal-Zählers (counter_max) alle bisher erfassten Reifen-Sensor-Module (6.i) dem eigenen Anhängerfahrzeug (3) zugeordnet werden, wenn zusätzlich alle erfassten Reifen-Sensor-Module (6.i) als dem zuletzt angehängten eigenen Anhängerfahrzeug (3) zugehörig erkannt wurden (606).

15. Verfahren nach Anspruch 10, **dadurch gekennzeichnet, dass** in der Bewertung nach Erreichen des Maximal-Zählers (counter max) und nachdem festgestellt wurde, dass genau zwei unterschiedliche Anhänger-Bezeichnungen (B) über die Datentelegramme (S1) übertragen werden, nur dann alle diejenigen Reifen-Sensor-Module (6.i) mit derjenigen Anhänger-Bezeichnung (B) dem eigenen Anhängerfahrzeug (3) zugeordnet werden, falls für diese Anhänger-Bezeichnung (B) die Datentelegramme (S1) von allen aufgrund der Anhänger-Achskonfiguration (AKonf) zu erwartenden Anzahl an Reifen-Sensor-Modulen (6.i) übertragen werden und falls für die andere Anhänger-Bezeichnung (B) weniger als ein Grenzprozentsatz (per th), beispielsweise 30% oder 40%, der aufgrund der Anhänger-Achskonfiguration (AKonf) für die andere Anhänger-Bezeichnung (B) zu erwartenden Anzahl an Reifen-Sensor-Modulen (106.i, 206,i) empfangen wird (608).

## Claims

1. Method for associating tyre sensor modules (6.i) with a trailer vehicle (3) of a driver's own commercial-vehicle/trailer combination (1), having at least the following steps:
- capturing data messages (S1) from tyre sensor modules (6.i, 106.i, 206.i) in a monitoring region (8) of a receiving module (5) (401; 600);
- associating the captured data messages (S1) with a tyre sensor module (6.i, 106.i, 206.i) (401; 601);
- ascertaining a number (counter_p_ID.i, counter_d_ID.i) of captured data messages (S1) for each detected tyre sensor module (6.i, 106.i, 206.i) (403; 603, 610);
- rating the captured data messages (S1) if the number (counter_p_ID.i, counter_d_ID.i) of captured data messages (S1) for at least one tyre sensor module (6.i, 106.i, 206.i) has reached a maximum counter (counter_max), in order to establish whether the tyre sensor modules (6.i, 106.i, 206.i) received in total up to then belong to the driver's own trailer vehicle (3) or to the adjacent trailer vehicle (103, 203) (404; 604; 613);
- accepting the tyre sensor modules (6.i) detected in the rating as affiliated to the driver's own trailer vehicle (3) (404; 615),
**characterized in that**
each tyre sensor module (6.i, 106.i, 206.i) detects a wheel position (R.i) associated with the respective tyre sensor module (6.i, 106.i, 206.i) and a trailer axle configuration (AKonf), so that for an accepted tyre sensor module (6.i) the detected wheel position (R.i) and the detected trailer axle configuration (AKonf) can be taken as a basis for making a positional association on the driver's own trailer vehicle (3) (405; 615) to allow tyre states (p, T, s) and/or tyre sensor module states of the driver's own trailer vehicle (3) to be output on the basis of a fixed position.

2. Method according to Claim 1, **characterized in that** the trailer axle configuration (AKonf) and/or the wheel position (R.i) are transmitted from respective tyre sensor modules (6.i, 106.i, 206.i) in coded fashion using the data message (S1), wherein this involves every possible trailer axle configuration (AKonf) for trailer vehicles (3, 103, 203) being assigned a respective value and every possible wheel position (R.i) within the applicable trailer axle configuration (AKonf) likewise being assigned a respective value, wherein the value for the trailer axle configuration (AKonf) and the value for the wheel position (R.i) are stored on the applicable tyre sensor module (6.i, 106.i, 206.i) and transmitted using the data message (S1).

3. Method according to Claim 2, **characterized in that** the value for the wheel position (R.i) corresponds to a coordinate pair (K1, K2) in a coordinate system (7).

4. Method according to one of the preceding claims, **characterized in that** the wheel position (R.i) transmitted using the data message (S1) and the trailer axle configuration (AKonf) are distributed over multiple data messages (S1) depending on the volume of data.

5. Method according to one of the preceding claims, **characterized in that** the accepted tyre sensor modules (6.i) are checked for plausibility, wherein this involves checking whether
- each tyre sensor module (6.i) associated with the driver's own trailer vehicle (3) uses the data message (S1) to also actually transmit a trailer axle configuration (AKonf) (502), and/or
- each tyre sensor module (6.i) associated with the driver's own trailer vehicle (3) transmits the same trailer axle configuration (AKonf) (503), and/or
- a number of modules (counter mod) for tyre sensor modules (6.i) associated with the driver's own trailer vehicle (3) is less than or equal to the number of tyre sensor modules (6.i) to be expected according to the trailer axle configuration (AKonf) (504), and/or
- each tyre sensor module (6.i) associated with the driver's own trailer vehicle (3) uses the data message (S1) to also actually transmit a wheel position (R.i) (505), and/or
- each tyre sensor module (6.i) associated with the driver's own trailer vehicle (3) transmits a different wheel position (R.i) (506), and/or
- all wheel positions (R.i) to be expected according to the trailer axle configuration (AKonf) are transmitted by the tyre sensor modules (6.i) (507).

6. Method according to Claim 5, **characterized in that** if individual tyre sensor modules (6.i) associated with the driver's own trailer vehicle (3) transmit no trailer axle configuration (AKonf) and/or different trailer axle configurations (AKonf) using the data message (S1),
- a trailer axle configuration (AKonf) is assumed to be reliable and is adopted for the driver's own trailer vehicle (3) if at least a maximum number of modules (mod_max) for tyre sensor modules (6.i) transmit the same trailer axle configuration (AKonf), wherein the maximum number of modules (mod_max) corresponds to a proportion of the number of modules (counter_mod), for example half the number of modules (counter_mod), (702), and
- the positional association of all tyre sensor modules (6.i) is erased and if need be an error message is output (701) if fewer than the maximum number of modules (mod max) for tyre sensor modules (6.i) transmit the same trailer axle configuration (AKonf).

7. Method according to Claim 5 or 6, **characterized in that** if individual tyre sensor modules (6.i) associated with the driver's own trailer vehicle (3) transmit no wheel position (R.i) using the data message (S1) and/or tyre sensor modules (6.i) are not received for all wheel positions (R.i) that are to be expected according to the trailer axle configuration (AKonf), and/or a wheel position (R.i) is transmitted by more than one tyre sensor module (6.i),
- a position is associated only with the tyre sensor modules (6.i) that transmit a wheel position (R.i) and whose wheel position (R.i) is not also transmitted by other tyre sensor modules (6.i).

8. Method according to Claim 5 or 6, **characterized in that** if
- the number of modules (counter_mod) is greater than the number of tyre sensor modules (6.i) to be expected according to the trailer axle configuration (AKonf), and/or
- at least one tyre sensor module (6.i) associated with the driver's own trailer vehicle (3) transmits no wheel position (R.i) using the data message (S1), and/or
- a wheel position (R.i) is transmitted by more than one tyre sensor module (6.i), and/or
- at least one tyre sensor module (6.i) associated with the driver's own trailer vehicle (3) transmits no trailer axle configuration (AKonf), and/or
- at least two tyre sensor modules (6.i) associated with the driver's own trailer vehicle (3) transmit different trailer axle configurations (AKonf) using the data message (S1),
the positional association of all tyre sensor modules (6.i) is erased and if need be an error message is output (701).

9. Method according to one of the preceding claims, **characterized in that** the associating of the tyre sensor modules (6.i) with the driver's own trailer vehicle (3) is followed by tyre states (p, T, s) and/or tyre sensor module states being monitored, wherein this involves the data messages (S1) from the tyre sensor modules (6.i) associated with the driver's own trailer vehicle (3) being evaluated and the respective tyre states (p, T, s) and/or the tyre sensor module states being output using a status signal (S2) and the tyre states (p, T, s) and/or the tyre sensor module states being displayed to the driver, wherein output and display on the basis of a fixed position is effected for the tyre sensor modules (6.i) for which a positional association has been ascertained, in particular stored, and output and display independently of position is effected for all other tyre sensor modules (6.i).

10. Method according to one of the preceding claims, **characterized in that** the data messages (S1) are rated by virtue of the reaching of the maximum counter (counter_max) for at least one tyre sensor module (6.i, 106.i, 206.i) being followed by the trailer axle configuration (AKonf) and the tyre position (R.i) and also additionally a trailer designation (B) transmitted using the data message (S1) being taken into consideration for performing an extended trailer detection (604, 612), wherein the trailer designation (B), the trailer axle configuration (AKonf) and the tyre position (R.i) are, to this end, already additionally associated with the respective tyre sensor module (6.i, 106.i, 206.i) from which data messages (S1) are received during the ascertaining of a number (counter_p_ID.i, counter_d_ID.i) of captured data messages (S1) (601).

11. Method according to Claim 10, **characterized in that** in the rating, after the maximum counter (counter max) is reached, all tyre sensor modules (6.i) detected up to then are associated with the driver's own trailer vehicle (3) if the maximum counter (counter _max) for at least one tyre sensor module (6.i) is reached and if only data messages (S1) from tyre sensor modules (6.i) that the same trailer designation (B), the same trailer axle configuration (AKonf) have been captured and at least a maximum number of modules (mod max) for different tyre sensor modules (6.i) transmit data messages (S1) having different wheel positions (R.i) (607),
wherein an immediate positional association is made for all tyre sensor modules (6.i) detected up to then and a positional association is made subsequently for all subsequently detected, still missing tyre sensor modules (6.i) according to the transmitted trailer axle configuration (AKonf) with the applicable trailer designation (B).

12. Method according to Claim 11, **characterized in that** the maximum number of modules (mod_max) corresponds to an arbitrary value between zero and the number of tyre sensor modules (6.i) to be expected on the basis of the trailer axle configuration (AKonf), preferably half.

13. Method according to Claim 11, **characterized in that** in the rating, after the maximum counter (counter max) is reached, all tyre sensor modules (6.i) detected up to then are associated with the driver's own trailer vehicle (3) if, up to the maximum counter (counter _max) being reached, only data messages (S1) from tyre sensor modules (6.i) that transmit the same trailer designation (B), the same trailer axle configuration (AKonf) and all wheel positions (R.i) matching the trailer configuration (AKonf) at least once have been captured (605).

14. Method according to Claim 13, **characterized in that** in the rating, after the maximum counter (counter _max) is reached, all tyre sensor modules (6.i) detected up to then are associated with the driver's own trailer vehicle (3) if additionally all detected tyre sensor modules (6.i) have been detected as affiliated to the most recently attached driver's own trailer vehicle (3) (606).

15. Method according to Claim 10, **characterized in that** in the rating, after the maximum counter (counter max) is reached and after it has been established that precisely two different trailer designations (B) are transmitted using the data messages (S1), all those tyre sensor modules (6.i) having that trailer designation (B) are then associated with the driver's own trailer vehicle (3) only if, for this trailer designation (B), the data messages (S1) are transmitted by all the number of tyre sensor modules (6.i) that is to be expected on the basis of the trailer axle configuration (AKonf) and if, for the other trailer designation (B), less than a limit percentage (per_th), for example 30% or 40%, of the number of tyre sensor modules (106.i, 206.i) that is to be expected on the basis of the trailer axle configuration (AKonf) for the other trailer designation (B) is received (608).

## Revendications

1. Procédé d'association de modules de capteur de pneumatique (6.i) à un véhicule de remorque (3) d'un attelage de véhicule utilitaire propre (1), le procédé comprenant au moins les étapes suivantes :
- acquérir des télégrammes de données (S1) provenant de modules de capteur de pneumatique (6.i, 106.i, 206.i) dans une zone de surveillance (8) d'un module de réception (5) (401 ; 600) ;
- associer les télégrammes de données acquis (S1) à un module de capteur de pneumatique (6.i, 106.i, 206.i) (401 ; 601) ;
- déterminer un nombre (counter_p_ID.i, counter_d_ID.i) de télégrammes de données acquis (S1) pour chaque module de capteur de pneumatique détecté (6.i, 106.i, 206.i) (403 ; 603, 610) ;
- évaluer les télégrammes de données acquis (S1) lorsque le nombre (counter _p_ID.i, counter_d_ID.i) de télégrammes de données acquis (S1) pour au moins un module de capteur de pneumatique (6.i, 106.i, 206.i) a atteint un compteur maximum (counter_max), pour déterminer si tous les modules de capteur de pneumatique détectés (6.i, 106.i, 206.i) appartiennent au véhicule de remorque propre (3) ou au véhicule de remorque adjacent (103, 203) (404 ; 604 ; 613) ;
- accepter les modules de capteur de pneumatique (6.i), qui ont été détectés lors de l'évaluation comme appartenant au véhicule de remorque propre (3) (404 ; 615),
**caractérisé en ce que**
chaque module de capteur de pneumatique (6.i, 106.i, 206.i) acquiert une position de roue (R.i) associée au module de capteur de pneumatique respectif (6.i, 106.i, 206.i) et une configuration d'essieu de remorque (AKonf) de sorte qu'une association de position peut être effectuée au niveau du véhicule de remorque propre (3) pour un module de capteur de pneumatique accepté (6.i) en fonction de la position de roue détectée (R.i) et de la configuration d'essieu de remorque acquise (AKonf) (405 ; 615) pour permettre une délivrance en sortie, liée à la position, des états de pneumatique (p, T, s) et/ou des états de module de capteur de pneumatique du véhicule de remorque propre (3).

2. Procédé selon la revendication 1, **caractérisé en ce que** la configuration d'essieu de remorque (AKonf) et/ou la position de roue (R.i) sont transmises par les modules capteurs de pneumatique respectifs (6.i, 106.i, 206.i) de manière codée sur le télégramme de données (S1), une valeur étant attribuée à chaque configuration d'essieu de remorque possible (AKonf) pour les véhicules de remorque (3, 103, 203) et une valeur étant également attribuée à chaque position de roue possible (R.i) dans la configuration d'essieu de remorque correspondante (AKonf),la valeur de la configuration d'essieu de remorque (AKonf) et la valeur de la position de roue (R.i) étant mémorisées sur le module de capteur de pneumatique correspondant (6.i, 106.i, 206.i) et étant transmises sur le télégramme de données (S1) .

3. Procédé selon la revendication 2, **caractérisé en ce que** la valeur de la position de roue (R.i) correspond à une paire de coordonnées (K1, K2) dans un système de coordonnées (7).

4. Procédé selon l'une des revendications précédentes, **caractérisé en ce que** la position de roue (R.i) transmise sur le télégramme de données (S1) et la configuration d'essieu de remorque (AKonf) sont réparties sur plusieurs télégrammes de données (S1) en fonction du volume de données.

5. Procédé selon l'une des revendications précédentes, **caractérisé en ce que** la plausibilité des modules de capteur de pneumatique acceptés (6.i) est vérifiée, une vérification étant effectuée pour savoir si
- chaque module de capteur de pneumatique (6.i) associé à un véhicule de remorque propre (3) transmet effectivement (502) une configuration d'essieu de remorque (AKonf) sur le télégramme de données (S1), et/ou
- chaque module de capteur de pneumatique (6.i) associé à un véhicule de remorque propre (3) transmet la même configuration d'essieu de remorque (AKonf) (503), et/ou
- un certain nombre (counter mod) de modules de capteurs de pneumatiques (6.i) associés au véhicule de remorque propre (3) est inférieur ou égal au nombre de modules de capteur de pneumatiques (6.i) à prévoir selon la configuration d'essieu de remorque (AKonf) (504), et/ou
- chaque module de capteur de pneumatique (6.i) associé au véhicule de remorque propre (3) transmet effectivement une position de roue (R.i) sur le télégramme de données (S1) (505),
et/ou
- chaque module de capteur de pneumatique (6.i) associé au véhicule de remorque propre (3) transmet une position de roue différente (R.i) (506), et/ou
- toutes les positions de roue (R.i) à prévoir selon la configuration d'essieu de remorque (AKonf) sont transmises par les modules de capteur de pneumatiques (6.i) (507).

6. Procédé selon la revendication 5, **caractérisé en ce que**, dans le cas où des modules de capteur de pneumatique individuels (6.i) associés au véhicule de remorque propre (3) ne transmettent pas de configuration d'essieu de remorque (AKonf) et/ou transmettent des configurations d'essieu de remorque (AKonf) différentes sur le télégramme de données (S1),
- une configuration d'essieu de remorque (AKonf) est supposée fiable et est adoptée pour le véhicule de remorque propre (3) si au moins un nombre maximum (mod_max) de modules de capteur de pneumatique (6.i) transmet la même configuration d'essieu de remorque (AKonf), le nombre de modules maximum (mod_max) correspondant à une fraction du nombre de modules (counter_mod), par exemple la moitié du nombre de modules (counter_mod) (702), et
- l'association de position de tous les modules de capteur de pneumatique (6.i) est supprimée et, éventuellement, un message d'erreur est délivré en sortie (701) si le nombre de modules de capteur de pneumatique (6.i) transmettant la même configuration d'essieu de remorque (AKonf) est inférieur au nombre maximum (mod_max).

7. Procédé selon la revendication 5 ou 6, **caractérisé en ce que**, dans le cas où des modules de capteur de pneumatique individuels (6.i) associés au véhicule de remorque propre (3) ne transmettent pas une position de roue (R.i) sur le télégramme de données (S1) et/ou des modules de capteur de pneumatique (6.i) ne sont pas reçus pour toutes les positions de roue (R.i) auxquelles on peut s'attendre en fonction de la configuration d'essieu de remorque (AKonf), et/ou une position de roue (R.i) est transmise par plus d'un module de capteur de pneumatique (6.i), - une position est associée aux seuls modules de capteur de pneumatique (6.i) qui transmettent une position de roue (R.i) et dont la position de roue (R.i) n'est pas également transmise par d'autres modules de capteur de pneumatique (6.i).

8. Procédé selon la revendication 5 ou 6, **caractérisé en ce que**, dans le cas où
- le nombre de modules (counter_mod) est supérieur au nombre de modules de capteur de pneumatiques (6.i) à prévoir selon la configuration d'essieu de remorque (AKonf), et/ou
- au moins un module de capteur de pneumatique (6.i) associé au véhicule de remorque propre (3) ne transmet aucune position de roue (R.i) sur le télégramme de données (S1), et/ou
- une position de roue (R.i) est transmise par plus d'un module de capteur de pneumatique (6.i), et/ou
- au moins un module de capteur de pneumatique (6.i) associé au véhicule de remorque propre (3) ne transmet pas de configuration d'essieu de remorque (AKonf), et/ou
- au moins deux modules de capteur de pneumatique (6.i) associés au véhicule de remorque propre (3) transmettent des configurations d'essieu de remorque (AKonf) différentes sur le télégramme de données (S1), l'association de position de tous les modules de capteur de pneumatique (6.i) est supprimée et éventuellement un message d'erreur est délivré (701).

9. Procédé selon l'une des revendications précédentes, **caractérisé en ce qu'**une surveillance d'états de pneumatique (p, T, s) et/ou d'états de module de capteur de pneumatique est effectuée après l'association des modules de capteur de pneumatique (6.i) au véhicule de remorque propre (3), les télégrammes de données (S1) étant pour cela évalués par les modules de capteur de pneumatique (6.i) associés au véhicule de remorque propre (3) et les états de pneumatique respectifs (p, T, s) et/ou les états de module de capteur de pneumatique étant délivrés en sortie sur un signal d'état (S2) et les états du pneumatique (p, T, s) et/ou les états de module de capteur de pneumatique étant indiqués au conducteur, une délivrance en sortie et une indication, liées à la position, étant effectuées pour les modules de capteur de pneumatique (6.i) pour lesquels une association de position a été déterminée, en particulier mémorisée, et une délivrance en sortie et une indication, indépendantes de la position, étant effectuées pour tous les autres modules de capteur de pneumatique (6.i) .

10. Procédé selon l'une des revendications précédentes, **caractérisé en ce que**, pour évaluer les télégrammes de données (S1) après que le compteur maximum (counter_max) a été atteint, la configuration d'essieu de remorque (AKonf) et la position de pneumatique (R.i) ainsi qu'en plus une désignation de remorque (B) transmises sur le télégramme de données (S1) sont prises en compte pour au moins un module de capteur de pneumatique (6.i, 106.i, 206.i) pour effectuer une détection de remorque étendue (604, 612), la désignation de remorque (B), la configuration d'essieu de remorque (AKonf) et la position de pneumatique (R.i) étant pour cela associées, déjà lors de la détermination d'un nombre (counter_p_ID.i, counter_d_ID.i) de télégrammes de données acquis (S1), au module de capteur de pneumatique respectif (6.i, 106.i, 206.i) par lequel des télégrammes de données (S1) sont reçus (601).

11. Procédé selon la revendication 10, **caractérisé en ce que**, lors de l'évaluation après que le compteur maximum (counter_max) a été atteint, tous les modules de capteur de pneumatique (6.i) précédemment détectés sont associés au véhicule de remorque propre (3) si le compteur maximum (counter_max) est atteint pour au moins un module de capteur de pneumatique (6.i) et si seuls les télégrammes de données (S1) ont été acquis par les modules de capteur de pneumatique (6.i), qui la même désignation de remorque (B), la même configuration d'essieu de remorque (AKonf) et si des télégrammes de données (S1) comportant différentes positions de roue (R.i) sont transmis par au moins un nombre maximal (mod_max) de modules de capteur de pneumatique (6.i) différents (607), une association de position immédiate étant effectuée pour tous les modules de capteur de pneumatique (6.i) précédemment détectés, et une association de position étant effectuée ultérieurement pour tous les modules de capteur de pneumatique (6.i) détectés ultérieurement, toujours manquants, selon la configuration d'essieu de remorque transmise (AKonf) comportant la désignation de remorque correspondante (B) .

12. Procédé selon la revendication 11, **caractérisé en ce que** le nombre de modules maximum (mod_max) correspond à une valeur quelconque comprise entre zéro et le nombre de modules de capteur de pneumatique (6.i) à prévoir en fonction de la configuration d'essieu de remorque (AKonf), de préférence à la moitié.

13. Procédé selon la revendication 11, **caractérisé en ce que**, lors de l'évaluation après que le compteur maximum (counter_max) a été atteint, tous les modules de capteur de pneumatique (6.i) précédemment détectés sont associés au véhicule de remorque propre (3) si seuls les télégrammes de données (S1), qui transmettent au moins une fois la même désignation de remorque (B), la même configuration d'essieu de remorque (AKonf) et toutes les positions de roue (R.i) adaptées à la configuration de remorque (AKonf), ont été acquis par des modules de capteur de pneumatique (6.i) jusqu'à ce que le compteur maximum (counter_max) a été atteint (605) .

14. Procédé selon la revendication 13, **caractérisé en ce que**, lors de l'évaluation après que le compteur maximum (counter_max) a été atteint, tous les modules de capteur de pneumatique (6.i) précédemment détectés sont associés à la remorque de véhicule propre (3) si, en plus, tous les modules de capteur de pneumatique (6.i) détectés ont été détectés comme appartenant au dernier véhicule de remorque propre attelé (3) (606).

15. Procédé selon la revendication 10, **caractérisé en ce que**, lors de l'évaluation après que le compteur maximum (counter_max) a été atteint et après qu'il a été déterminé qu'exactement deux désignations de remorque (B) différentes sont transmises sur les télégrammes de données (S1), alors seulement tous les modules de capteur de pneumatique (6.i) comportant la désignation de remorque (B) sont associés au véhicule de remorque propre (3) si, pour cette désignation de remorque (B), les télégrammes de données (S1) sont transmis par tous les modules de capteur de pneumatique (6.i) à prévoir sur la base de la configuration d'essieu de remorque (AKonf) et si, pour l'autre désignation de remorque (B), moins d'un pourcentage limite (per_th), par exemple 30 % ou 40 %, du nombre de modules de capteur de pneumatique (106.i, 206.i) à prévoir pour l'autre désignation de remorque (B) en raison de la configuration d'essieu de remorque (AKonf), est reçu (608).
